# EUROPÄISCHE PATENTSCHRIFT

(11) **EP 1 383 382 B1**
(45) Veröffentlichungstag und Bekanntmachung des Hinweises auf die Patenterteilung: **08.03.2006**
(21) Anmeldenummer: 02764055.6
(22) Anmeldetag: 09.04.2002
(51) Int. Cl.: A01N 43/80, A01N 43/08, A01N 41/10

(54) **HERBIZIDE MITTEL ENTHALTEND BENZOYLCYCLOHEXANDIONE UND SAFENER**
HERBICIDAL AGENT COMPRISING BENZOYLCYCLOHEXANEDIONES AND SAFENERS
AGENTS HERBICIDES CONTENANT DES BENZOYLCYCLOHEXANEDIONES ET DES PHYTOPROTECTEURS

(30) Priorität: 21.04.2001 DE 10119721
(43) Veröffentlichungstag der Anmeldung: 28.01.2004
(73) Patentinhaber: Bayer CropScience GmbH, 65929 Frankfurt/Main (DE)
(72) Erfinder: ZIEMER, Frank, D-65830 Kriftel (DE); VAN ALMSICK, Andreas, 61184 Karben (DE); WILLMS, Lothar, 65719 Hofheim (DE); AULER, Thomas, 65812 Bad Soden (DE); BIERINGER, Hermann, 65817 Eppstein (DE); HACKER, Erwin, 65239 Hochheim (DE); ROSINGER, Christopher, 65719 Hofheim (DE)
(86) Internationale Anmeldenummer: PCT/EP2002/003902
(87) Internationale Veröffentlichungsnummer: WO 2002/085120

(56) Entgegenhaltungen:
- EP-A- 0 551 650
- WO-A-00/00029
- WO-A-00/21924
- WO-A-00/30447
- WO-A-01/07422
- WO-A-01/17350
- WO-A-92/19107
- WO-A-98/27049
- WO-A-98/34480
- WO-A-99/66795
- DE-A- 19 961 465
- GB-A- 2 350 298

## Beschreibung

Die Erfindung betrifft das technische Gebiet der Pflanzenschutzmittel, insbesondere Herbizid-Antidot-Kombinationen (Wirkstoff-Safener-Kombinationen), die für den Einsatz gegen konkurrierende Schadpflanzen in Nutzpflanzenkulturen geeignet sind.

Zahlreiche herbizide Wirkstoffe sind als Inhibitoren des Enzyms p-Hydroxyphenyl-Pyruvat-Dioxygenase (HPPD) bekannt. So sind aus Proc. Br. Crop Prot. Conf. Weeds, 1991, 1, 51; Proc. Br. Crop Prot. Conf. Weeds, 1995, 1, 35 derartige Benzoylcyclohexandione, Benzoylpyrazole und Benzoylisoxazole bekannt. In jüngerer Zeit wurden beispielsweise in WO 00/21924 und WO 01/07422 weitere solcher Wirkstoffe offenbart.

Wie bei vielen anderen herbiziden Wirkstoffen sind auch diese Inhibitoren der HPPD nicht immer ausreichend verträglich mit (d.h. nicht selektiv genug bei) einigen wichtigen Kulturpflanzen, wie Mais, Reis oder Getreide, so daß ihrem Einsatz enge Grenzen gesetzt sind. Sie können deshalb in manchen Kulturen nicht oder nur in so geringen Aufwandmengen eingesetzt werden, daß die erwünschte breite herbizide Wirksamkeit gegenüber Schadpflanzen nicht gewährleistet ist. Speziell können viele der genannten Herbizide nicht vollständig selektiv gegen Schadpflanzen in Mais, Reis, Getreide, Zuckerrohr und einigen anderen Kulturen eingesetzt werden.

Zur Überwindung dieser Nachteile ist es bekannt, herbizide Wirkstoffe in Kombination mit einem sogenannten Safener oder Antidot einzusetzen. So sind beispielsweise in EP- A 0 943 240, WO 99166795 und WO 00/30447 verschiedene Kombinationen von bestimmten Inhibitoren der HPPD mit Safenem beschrieben.

Unter einem Safener ist eine Verbindung zu verstehen, die die phytotoxischen Eigenschaften eines Herbizides gegenüber Nutzpflanzen aufhebt oder verringert, ohne daß die herbizide Wirkung gegenüber Schadpflanzen wesentlich vermindert wird.

Die Auffindung eines Safeners für eine bestimmte Gruppe von Herbiziden ist nach wie vor eine schwierige Aufgabe, da die genauen Mechanismen, durch die ein Safener die Schadwirkung von Herbiziden verringert, nicht bekannt sind. Die Tatsache, daß eine Verbindung in Kombination mit einem bestimmten Herbizid als Safener wirkt, läßt daher keine Rückschlüsse darauf zu, ob eine solche Verbindung auch mit anderen Gruppen von Herbiziden Safenerwirkung aufweist. So hat sich bei der Anwendung von Safenern zum Schutz der Nutzpflanzen vor Schädigungen des Herbizids gezeigt, daß die Safener in vielen Fällen immer noch gewisse Nachteile aufweisen können. Dazu zählen:
- der Safener vermindert die Wirkung der Herbizide gegen die Schadpflanzen,
- die nutzpflanzenschützenden Eigenschaften sind nicht ausreichend,
- in Kombination mit einem gegebenen Herbizid ist das Spektrum der Nutzpflanzen, in denen der Safener/Herbizid-Einsatz erfolgen soll, nicht ausreichend groß,
- ein gegebener Safener ist nicht mit einer ausreichend großen Anzahl von Herbiziden kombinierbar.

Aufgabe der vorliegenden Erfindung war es, weitere Kombinationen von Herbiziden aus der Gruppe der HPPD-Inhibitoren mit Safeneren bereit zu stellen, die geeignet sind, die Selektivität dieser Herbizide gegenüber wichtigen Kulturpflanzen zu steigem.

Es wurden nun neue Kombinationen von bestimmten Herbiziden aus der Gruppe der HPPD-Inhibitoren, die in 3-Position des Benzolyteils ausgewählte Substituenten tragen, mit zahlreichen anderen Verbindungen gefunden, die die Selektivität dieser Herbizide gegenüber wichtigen Kulturpflanzen erhöhen.

Gegenstand der Erfindung ist daher ein herbizid wirksames Mittel, enthaltend
A) eine herbizid wirksame Menge an einer oder mehreren Verbindungen der Formel (I) 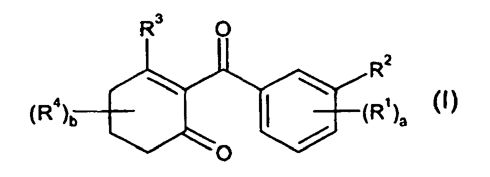
   worin die Symbole und Indizes folgende Bedeutungen haben:
   - R¹: ist Nitro, Amino, Halogen, Cyano, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₂-C₄)-Haloalkinyl, (C₁-C₄)-Haloalkoxy, (C₁-C₄)-Haloalkylthio, (C₁-C₄)-Alkoxycarbonyl, (C₁-C₄)-Alkylsulfonyl, (C₁-C₄)-Alkylsulfinyl, (C₁-C₄)-Alkylthio, (C₁-C₄)-Alkoxy, (C₁-C₄)-Alkoxy-(C₁-C₄)-alkoxy, (C₁-C₄)-Alkylcarbonyl, (C₁-C₄)-Alkylaminosulfonyl, (C₁-C₄)-Dialkylaminosulfonyl, (C₁-C₄)-Alkylcarbamoyl, (C₁-C₄)-Dialkylcarbamoyl, (C₁-C₄)-Alkoxy-(C₁-C₄)-alkyl, (C₁-C₄)-Alkylamino oder (C₁-C₄)-Dialkylamino;
   - R²: ist (C₁-C₄)-Haloalkoxy-(C₁-C₄)-alkyl, (C₁-C₄)-Alkoxy-(C₁-C₄)-alkoxy-(C₁-C₄)-alkoxy-(C₁-C₄)-alkyl, (C₃-C₆)-Cycloalkoxy-(C₁-C₄)-alkyl, (C₃-C₆)-cycloalkyl-(C₁₋C₄)-alkoxy, Tetrahydrofuran-2-yl-methoxy-(C₁-C₄)-alkyl, Tetrahydrofuran-3-yl-methoxy-(C₁-C₄)-alkyl oder durch einen Rest aus der Gruppe Cyanomethyl, Ethoxymethyl und Methoxymethyl substituierten heterocyclischen Rest der Gruppe Isoxazol-3-yl und 4,5-Dihydro-isoxazol-3-yl:
   - R³: ist OR⁵, Cyano, Halogen, Cyanato, Thiocyanato, (C₁-C₄)-Alkylthio, (C₁-C₄)-Alkylsulfinyl, (C₁-C₄)-Alkylsulfonyl, (C₂-C₄)-Alkenylthio, (C₂-C₄)-Alkenylsulfinyl, (C₂-C₄)-Alkenylsulfonyl, (C₂-C₄)-Alkinylthio, (C₂-C₄)-Alkinylsulfinyl, (C₂-C₄)-Alkinylsulfonyl, (C₁-C₄)-Haloalkylthio, (C₂-C₄)-Haloalkenylthio, (C₂-C₄)-Haloalkinylthio, (C₁-C₄)-Haloalkylsulfinyl, (C₂-C₄)-Haloalkenylsulfinyl, (C₂-C₄)-Haloalkinylsulfinyl, (C₁-C₄)-Haloalkylsulfonyl, (C₂-C₄)-Haloalkenylsulfonyl oder (C₂-C₄)-Haloalkinylsulfonyl;
   - R⁴: ist (C₁-C₄)-Alkyl;
   - R⁵: ist Wasserstoff, (C₁-C₄)-Alkyl, (C₁-C₄)-Haloalkyl oder (C₁-C₄)-Alkoxy-(C₁-C₄)-alkyl;
   - a: ist 0., 1, 2 oder 3;
   - b: ist 0, 1 oder 2;

   und
B) einer antidotisch wirksamen Menge an einer oder mehreren Verbindungen aus den Gruppen a) bis e):
   a) Verbindungen der Formeln (II) bis (IV), 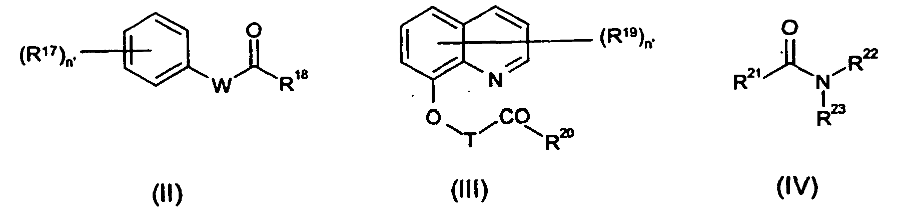 worin die Symbole und Indizes folgende Bedeutungen haben:
      - n': ist eine natürliche Zahl von 0 bis 5, vorzugsweise 0 bis 3;
      - T: ist eine (C₁- oder C₂-)-Alkandiylkette, die unsubstituiert oder mit einem oder zwei (C₁-C₄)-Alkylresten oder mit [(C₁-C₃)-Alkoxy]-carbonyl substituiert ist;
      - W: ist ein Rest aus der Gruppe (W1) bis (W4), 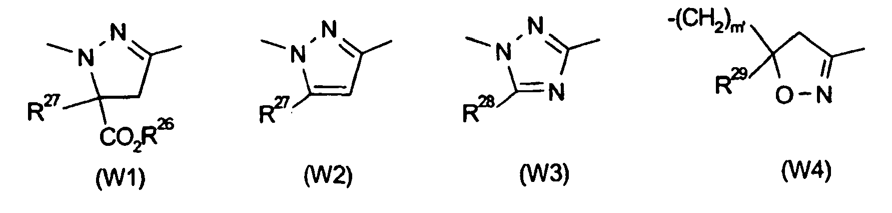
      - m': ist 0 oder 1;
      - R¹⁷ , R¹⁹: sind gleich oder verschieden Halogen, (C₁-C₄)-Alkyl, (C₁-C₄)-Alkoxy, Nitro oder (C₁-C₄)-Haloalkyl;
      - R¹⁸, R²⁰: sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, der über das N-Atom mit der Carbonylgruppe in (II) bzw. (III) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
      - R²⁴: ist Wasserstoff oder ein unsubstituierter oder substituierter aliphatischer Kohlenwasserstoffrest, vorzugsweise mit insgesamt 1 bis 18 C-Atomen;
      - R²⁵: ist Wasserstoff, (C₁-C₆)-Alkyl, (C₁-C₆)-Alkoxy oder substituiertes oder unsubstituiertes Phenyl;
      - R²⁶: ist Wasserstoff, (C₁-C₈)-Alkyl, (C₁-C₈)-Haloalkyl, (C₁-C₄)-Alkoxy-(C₁-C₄)-alkyl, (C₁-C₆)-Hydroxyalkyl, (C₃-C₁)-Cycloalkyl oder Tri-(C₁-C₄)-alkyl-silyl;
      - R²⁷, R²⁸, R²⁹: sind gleich oder verschieden Wasserstoff, (C₁-C₈)-Alkyl, (C₁₋C₆)-Haloalkyl, (C₃-C₁₂)-Cycloalkyl oder substituiertes oder unsubstituiertes Phenyl;
      - R²¹: ist (C₁-C₄)-Alkyl, (C₁-C₄)-Haloalkyl, (C₂-C₄)-Alkenyl, (C₂-C₄)-Haloalkenyl, (C₃-C₇)-Cycloalkyl, vorzugsweise Dichlormethyl;
      - R²² , R²³: sind gleich oder verschieden Wasserstoff, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₁-C₄)- Alkylcarbamoyl-(C₁-C₄)-alkyl, (C₂-C₄)-Alkenylcarbamoyl-(C₁-C₄)-alkyl, (C₁-C₄)-Alkoxy-(C₁-C₄)-alkyl, Dioxolanyl-(C₁-C₄)-alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
   b) eine oder mehreren Verbindungen aus Gruppe:
      1,8-Naphthalsäureanhydrid,
      Methyl-diphenylmethoxyacetat,
      Cyanomethoxyimino(phenyl)acetonitril (Cyometrinil),
      1,3-Dioxolan-2-ylmethoxyimino(phenyl)acetonitril (Oxabetrinil),
      4'-Chlor-2,2,2-trifluoracetophenon O-1,3-dioxolan-2-ylmethyloxim (Fluxofenim),
      4,6-Dichlor-2-phenylpyrimidin (Fenclorim),
      Benzyl-2-chlor-4-trifluormethyl-1,3-thiazol-5-carboxylat (Flurazole),
      2-Dichlormethyl-2-methyl-1,3-dioxolan (MG-191),
      N-(4-Methylphenyl)-N'-(1-methyl-1-phenylethyl)hamstoff (Dymron),
      1-[4-(N-2-Methoxybenzoylsulfamoyl)phenyl]-3-methythamstoff,
      1-[4-(N-2-Methoxybenzoylsulfamoyl)phenyl]-3,3-dimethylhamstoff,
      1-[4-(N-4,5-Dimethylbenzoylsulfamoyl)phenyl]-3-methylhamstoff,
      1-[4-(N-Naphthoylsulfamoyl)phenyl]-3,3-dimethylhamstoff,
      (2,4-Dichlorphenoxy)essigsäure (2,4-D) (4-Chlorphenoxy)essigsäure,
      (R,S)-2-(4-Chlor-o-tolyioxy)propionsäure (Mecoprop),
      4-(2,4-Dichlorphenoxy)buttersäure (2,4-DB),
      (4-Chlor-o-tolyloxy)essigsäure (MCPA),
      4-(4-Chlor-o-tolyloxy)buttersäure,
      4-(4-Chlorphenoxy)buttersäure,
      3,6-Dichlor-2-methoxybenzoesäure (Dicamba),
      1-(Ethoxycarbonyl)ethyl 3,6-dichlor-2-methoxybenzoat (Lactidichlor)

      sowie deren Salze und Ester, vorzugsweise (C₁-C₈);
   c) N-Acylsulfonamide der Formel (V) und ihre Salze, 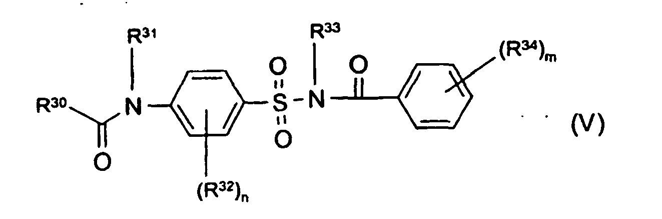
      worin
      - R³⁰: Wasserstoff, einen kohlenstoffhaltigen Rest wie einen Kohlenwasserstoffrest, einen Kohlenwasserstoffoxyrest, einen Kohlenwasserstoffaminorest, einen Kohlenwasserstoffthiorest oder einen Heterocyclylrest, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist, wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
      - R³¹: Wasserstoff oder (C₁-C₄)-Alkyl, vorzugsweise Wasserstoff, oder
      - R³⁰ und R³¹: zusammen mit der Gruppe der Formel -CO-N- den Rest eines 3- bis 8-gliedrigen gesättigten oder ungesättigten Rings;
      - R³²: gleich oder verschieden Halogen, Cyano, Nitro, Amino, Hydroxy, Carboxy, Formyl, CONH₂, SO₂NH₂ oder einen Rest der Formel -Z^{b}-R^{b} ;
      - R³³: Wasserstoff oder (C₁-C₄)-Alkyl, vorzugsweise Wasserstoff;
      - R³⁴: gleich oder verschieden Halogen, Cyano, Nitro, Amino, Hydroxy, Carboxy, CHO, CONH₂, SO₂NH₂ oder einen Rest der Formel -Z^{c}-R^{c} ;
      - R^{a}: einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
      - R^{b},R^{c}: gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁₋C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂₋Gruppen jeweils durch ein Sauerstoffatom ersetzt sind;
      - Z^{a}: eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- oderNR*-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
      - Z^{b},Z^{c}: unabhängig voneinander eine direkte Bindung oder eine divalente Gruppe der Formel -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*- oder -NR*-CO-, wobei die rechts angegebene Bindung der jeweiligen divalenten Gruppe die Bindung zum Rest R^{b} bzw. R^{c} ist und wobei die R* in den letztgenannten 5 Resten unabhängig voneinander jeweils H, (C₁-C₄)-Alkyl oder Halo-(C₁-C₄)-alkyl bedeuten;
      - n: eine ganze Zahl von 0 bis 4, vorzugsweise 0, 1 oder 2, insbesondere 0 oder 1, und
      - m: eine ganze Zahl von 0 bis 5, vorzugsweise 0, 1, 2 oder 3, insbesondere 0, 1 oder 2;

      bedeuten;
   d) Acylsulfamoylbenzoesäureamide der allgemeinen Formel (VI), gegebenenfalls auch in Salzform, 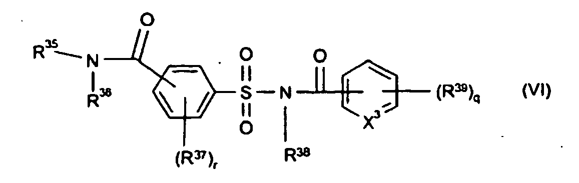
      worin
      - X³: CH oder N;
      - R³⁵: Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, SO₂NH₂ und Z^{a}-R^{a} substituiert sind;
      - R³⁶: Wasserstoff, Hydroxy, (C₁-C₆)-Alkyl, (C₂-C₆)-Alkenyl, (C₂-C₆)-Alkinyl, (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
      - R³⁵ und R³⁶: zusammen mit dem sie tragenden Stickstoffatom einen 3- bis 8-gliedrigen gesättigten oder ungesättigten Ring;
      - R³⁷: Halogen, Cyano, Nitro, Amino, Hydroxy, Carboxy, CHO, CONH₂, SO₂NH₂ oder Z^{b}-R^{b};
      - R³⁸: Wasserstoff, (C₁-C₄)-Alkyl, (C₂-C₄)-Alkenyl oder (C₂C₄)-Alkinyl;
      - R³⁹: Halogen, Cyano, Nitro, Amino, Hydroxy, Carboxy, Phosphoryl, CHO, CONH₂, SO₂NH₂ oder Z^{c}-R^{c};
      - R^{a}: einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
      - R^{b}, R^{c}: gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
      - Z^{a}: eine divalente Einheit aus der Gruppe O, S, CO, CS, C(O)O, C(O)S, SO, SO₂, NR^{d}, C(O)NR^{d} oder SO₂NR^{d};
      - Z^{b}, Z^{c}: gleich oder verschieden eine direkte Bindung oder eine divalente Einheit aus der Gruppe O, S, CO, CS, C(O)O, C(O)S, SO, SO₂, NR^{d}, SO₂NR^{d} oder C(O)NR^{d};
      - R^{d}: Wasserstoff, (C₁-C₄)-Alkyl oder (C₁-C₄)-Haloalkyl;
      - r: eine ganze Zahl von 0 bis 4, und
      - q: für den Fall, daß X³ für CH steht, eine ganze Zahl von 0 bis 5, und für den Fall, daß X für N steht, eine ganze Zahl von 0 bis 4 bedeuten;
   e) Verbindungen der Formel (VII), 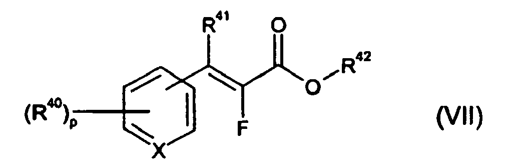
      worin die Symbole und Indizes folgende Bedeutungen haben:
      in welcher
      - X: CH oder N bedeutet,
      - p: für den Fall, daß X = N ist, eine ganze Zahl von 0 bis 2 und für den Fall, daß X = CH ist, eine ganze Zahl von 0 bis 3 bedeutet;
      - R⁴⁰: Halogen, (C₁-C₄)-Alkyl, (C₁-C₄)-Haloalkyl, (C₁-C₄)-Alkoxy, (C₁-C₄)-Haloalkoxy, Nitro, (C₁-C₄)-Alkylthio, (C₁-C₄)-Alkylsulfonyl, (C₁-C₄)-Alkoxycarbonyl, Phenyl oder Phenoxy bedeutet, wobei die beiden letztgenannten Reste unsubstituiert oder durch einen oder mehrere, vorzugsweise bis zu drei gleiche oder verschiedene Reste aus der Gruppe, bestehend aus Halogen, (C₁-C₄)-Alkyl, (C₁-C₄)-Haloalkyl, (C₁-C₄)-Alkoxy, Halogen-(C₁-C₄)-alkoxy, Nitro, Cyano substituiert sind;
      - R⁴¹: Wasserstoff oder (C₁-C₄)-Alkyl bedeutet und
      - R⁴²: Wasserstoff, (C₁-C₈)-Alkyl, (C₃-C₆)-Cycloalkyl, (C₂-C₆)-Alkenyl, (C₂-C₆)-Alkinyl oder Aryl bedeutet, wobei jeder der vorgenannten C-haltigen Reste unsubstituiert oder durch einen oder mehrere, vorzugsweise bis zu drei gleiche oder verschiedene Reste aus der Gruppe, bestehend aus Halogen, Nitro, Cyano, Hydroxy, (C₁-C₈)-Alkoxy, worin eine oder mehrere, vorzugsweise bis zu drei CH₂-Gruppen durch Sauerstoff ersetzt sein können, (C₁-C₄)-Alkylthio, (C₁-C₄)-Alkylsulfonyl, (C₃-C₆)-Cycloalkyl, (C₂-C₄)-Alkenyloxy, (C₂-C₄)-Alkinyloxy substituiert ist,

einschließlich der Stereoisomeren und der in der Landwirtschaft gebräuchlichen Salze.

Herbizid wirksame Menge bedeutet im Sinne der Erfindung eine Menge an einem oder mehreren Herbiziden, die geeignet ist, den Pflanzenwuchs negativ zu beinflussen.

Antidotisch wirksame Menge bedeutet im Sinne der Erfindung eine Menge an einem oder mehreren Safenem, die geeignet ist, der phytotoxischen Wirkung eines Herbizids oder Herbizidgemisches an einer Nutzpflanze zumindest teilweise entgegenzuwirken.

Sofern es im einzelnen nicht anders definiert wird, gelten für die Reste in den Formeln zu (I) bis (VIII) und nachfolgenden Formeln im allgemeinen die folgenden Definitionen.

Die Reste Alkyl, Alkoxy, Haloalkyl, Haloalkoxy, Alkylamino und Alkylthio sowie die entsprechenden ungesättigten und/oder substituierten Reste können im Kohlenstoffgerüst jeweils geradkettig oder verzweigt sein. Alkylreste, auch in den zusammengesetzten Bedeutungen wie Alkoxy, Haloalkyl usw. haben vorzugsweise 1 bis 4 C-Atome und bedeuten z.B. Methyl, Ethyl, n- oder i-Propyl, n-, i-, t- oder 2-Butyl. Alkenyl- und Alkinylreste haben die Bedeutung der den Alkylresten entsprechenden möglichen ungesättigten Reste; Alkenyl bedeutet z.B. Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl. Alkinyl bedeutet z.B. Propargyl, But-2-in-1-yl, But-3-in-1-yl, 1-Methyl-but-3-in-1-yl. "(C₁-C₄)-Alkyl" ist die Kurzschreibweise für Alkyl mit 1 bis 4 C-Atomen; entsprechendes gilt für andere allgemeine Restedefinitionen mit in Klammern angegebenen Bereichen für die mögliche Anzahl von C-Atomen.

Cycloalkyl bedeutet bevorzugt einen cyclischen Alkylrest mit 3 bis 8, vorzugsweise 3 bis 7, besonders bevorzugt 3 bis 6 C-Atomen, beispielsweise Cyclopropyl, Cyclobutyl, Cyclopentyl und Cyclohexyl. Cycloalkenyl und Cycloalkinyl bezeichnen entsprechende ungesättigte Verbindungen.

Halogen bedeutet Fluor, Chlor, Brom oder lod. Haloalkyl, -alkenyl und -alkinyl bedeuten durch Halogen, vorzugsweise durch Fluor, Chlor und/oder Brom, insbesondere durch Fluor oder Chlor, teilweise oder vollständig substituiertes Alkyl, Alkenyl oder Alkinyl, z.B. CF₃, CHF₂, CH₂F, CF₂CF₃, CH₂FCCIFH, CCl₃, CHCl₂, CH₂CH₂Cl. Haloalkoxy ist z.B. OCF₃, OCHF₂, OCH₂F, OCF₂CF₃, OCH₂CF₃ und OCH₂CH₂Cl. Entsprechendes gilt für sonstige Halogen substituierte Reste.

Ein aliphatischer Kohlenwasserstoffrest ist im allgemeinen ein geradkettiger oder verzweigter gesättigter oder ungesättigter Kohlenwasserstoffrest, vorzugsweise mit 1 bis 18, besonders bevorzugt 1 bis 12 C-Atomen, z.B. Alkyl, Alkenyl oder Alkinyl. Aryl ist im allgemeinen ein mono-, bi- oder polycyclisches aromatisches System mit vorzugsweise 6 bis 14 C-Atomen, vorzugsweise Phenyl, Naphthyl, Pentalenyl, Tetrahydronaphthyl, Indenyl, Indanyl und Fluorenyl, besonders bevorzugt Phenyl. Vorzugsweise bedeutet aliphatischer Kohlenwasserstoffrest Alkyl, Alkenyl oder Alkinyl mit bis zu 12 C-Atomen; entsprechendes gilt für einen aliphatischen Kohlenwasserstoffrest in einem Kohlenwasserstoffoxyrest.

Heterocyclischer Ring, -Rest oder Heterocyclyl bedeutet ein mono-, bi- oder polycyclisches Ringsystem, das gesättigt, ungesättigt und/oder aromatisch ist und eine oder mehrere, vorzugsweise 1 bis 4, Heteroatome, vorzugsweise aus der Gruppe N, S und O, enthält. Bevorzugt sind gesättigte Heterocyclen mit 3 bis 7 Ringatomen und einem oder zwei Heteroatomen aus der Gruppe N, O und S, wobei Chalcogene nicht benachbart sind. Besonders bevorzugt sind monocyclische Ringe mit 3 bis 7 Ringatomen und einem Heteroatom aus der Gruppe N, O und S, sowie Morpholin, Dioxolan, Piperazin, Imidazolin und Oxazolidin. Ganz besonders bevorzugte gesättigte Heterocyclen sind Oxiran, Pyrrolidon, Morpholin und Tetrahydrofuran. Bevorzugt sind auch teilweise ungesättigte Heterocyclen mit 5 bis 7 Ringatomen und einem oder zwei Heteroatomen aus der Gruppe N, O und S. Besonders bevorzugt sind teilweise ungesättigte Heterocyclen mit 5 bis 6 Ringatomen und einem Heteroatom aus der Gruppe N, O und S. Ganz besonders bevorzugte teilweise ungesättigte Heterocyclen sind Pyrazolin, Imidazolin und Isoxazolin. Ebenso bevorzugt sind mono- oder bicyclische aromatische Heterocyclen mit 5 bis 6 Ringatomen, die ein bis vier Heteroatome aus der Gruppe N, O, S enthalten, wobei Chalcogene nicht benachbart sind. Besonders bevorzugt sind monocyclische aromatische Heterocyclen mit 5 bis 6 Ringatomen, die ein Heteroatom aus der Gruppe, N, O und S enthalten, sowie Pyrimidin, Pyrazin, Pyridazin, Oxazol, Thiazol, Thiadiazol, Oxadiazol, Pyrazol, Triazol und lsoxazol. Ganz besonders bevorzugt sind Pyrazol, Thiazol, Triazol und Furan.

Substituierte Reste, wie substituierte Kohlenwasserstoffreste, z.B. substituiertes Alkyl, Alkenyl, Alkinyl, Aryl, Phenyl und Arylalkyl wie Benzyl, oder substituiertes Heterocyclyl oder Heteroaryl, bedeuten einen vom unsubstituierten Grundkörper abgeleiteten substituierten Rest, wobei die Substituenten vorzugsweise einen oder mehrere, vorzugsweise 1, 2 oder 3, im Falle von Cl und F auch bis zur maximal möglichen Anzahl, Reste aus der Gruppe Halogen, Alkoxy, Haloalkoxy, Alkylthio, Hydroxy, Amino, Nitro, Carboxy, Cyano, Azido, Alkoxycarbonyl, Alkylcarbonyl, Formyl, Carbamoyl, Mono- und Dialkylaminocarbonyl, substituiertes Amino wie Acylamino, Mono- und Dialkylamino und Alkylsulfinyl, Haloalkylsulfinyl, Alkylsulfonyl, Haloalkylsulfonyl und, im Falle cyclischer Reste, auch Alkyl und Haloalkyl sowie den genannten gesättigten kohlenwasserstoffhaltigen Resten entsprechende ungesättigte aliphatische Reste, vorzugsweise Alkenyl, Alkinly, Alkenyloxy, Alkinyloxy, bedeuten. Bei Resten mit C-Atomen sind solche mit 1 bis 4 C-Atomen, insbesondere 1 oder 2 C-Atomen, bevorzugt. Bevorzugt sind in der Regel Substituenten aus der Gruppe Halogen, z.B. Fluor oder Chlor, (C₁-C₄)Alkyl, vorzugsweise Methyl oder Ethyl, (C₁-C₄)-Haloalkyl, vorzugsweise Trifluormethyl, (C₁-C₄)-Alkoxy, vorzugsweise Methoxy oder Ethoxy, (C₁-C₄)-Haloalkoxy, Nitro und Cyano. Besonders bevorzugt sind dabei die Substituenten Methyl, Methoxy und Chlor.

Mono- oder disubstituiertes Amino bedeutet einen chemisch stabilen Rest aus der Gruppe der substituierten Aminoreste, welche beispielsweise durch einen oder zwei gleiche oder verschiedene Reste aus der Gruppe Alkyl, Alkoxy, Acyl und Aryl N-substituiert sind; vorzugsweise Monoalkylamino, Dialkylamino, Acylamino, Arylamino, N-Alkyl-N-arylamino sowie N-Heterocyclen. Dabei sind Alkylreste mit 1 bis 4 C-Atomen bevorzugt. Aryl ist dabei vorzugsweise Phenyl oder substituiertes Phenyl. Für Acyl gilt dabei die weiter unten genannte Definition, vorzugsweise (C₁₋C4)-Alkanoyl. Entsprechendes gilt für substituiertes Hydroxylamino oder Hydrazino.

Gegebenenfalls substituiertes Phenyl ist vorzugsweise Phenyl, das unsubstituiert oder ein- oder mehrfach, vorzugsweise bis zu dreifach, bei Halogen wie Cl und F auch bis zu fünffach, durch gleiche oder verschiedene Reste aus der Gruppe Halogen, (C₁-C₄)-Alkyl, (C₁-C₄)-Alkoxy, (C₁-C₄)-Haloalkyl, (C₁-C₄)-Haloalkoxy und Nitro substituiert ist, z.B. o-, m- und p-Tolyl, Dimethylphenyle, 2-, 3- und 4-Chlorphenyl, 2-, 3- und 4-Trifluor- und -Trichlorphenyl, 2,4-, 3,5-, 2,5- und 2,3-Dichlorphenyl, o-, m- und p-Methoxyphenyl.

Ein Acylrest bedeutet den Rest einer organischen Säure mit vorzugsweise bis zu 6 C-Atomen, z.B. den Rest einer Carbonsäure und Reste davon abgeleiteter Säuren wie der Thiocarbonsäure, gegebenenfalls N-substituierter Iminocarbonsäuren, oder der Rest von Kohlensäuremonoestem, gegebenenfalls N-substituierter Carbaminsäuren, Sulfonsäuren, Sulfinsäuren, Phosphonsäuren, Phosphinsäuren. Acyl bedeutet beispielsweise Formyl, Alkylcarbonyl, wie (C₁-C₄)-Alkylcarbonyl, Phenylcarbonyl, wobei der Phenylring substituiert sein kann, z.B. wie oben für Phenyl angegeben, oder Alkyloxycarbonyl, Phenyloxycarbonyl, Benzyloxycarbonyl, Alkylsulfonyl, Alkylsulfinyl oder N-Alkyl-1-iminoalkyl.

Von den Formeln (I) bis (VIII) umfaßt sind auch alle Stereoisomeren, welche die gleiche topologische Verknüpfung der Atome aufweisen, und deren Gemische. Solche Verbindungen enthalten ein oder mehrere asymmetrische C-Atome oder auch Doppelbindungen, die in den allgemeinen Formeln nicht gesondert angegeben sind. Die durch ihre spezifische Raumform definierten möglichen Stereoisomeren, wie Enantiomere, Diastereomere, Z- und E-Isomere, können nach üblichen Methoden aus Gemischen der Stereoisomeren erhalten oder auch durch stereoselektive Reaktionen in Kombination mit dem Einsatz von stereochemisch reinen Ausgangsstoffen hergestellt werden.

Als herbizide Wirkstoffe eignen sich erfindungsgemäß solche Verbindungen der allgemeinen Formel (I), die allein nicht oder nicht optimal in Nutzpflanzenkulturen wie Getreidekulturen, Zuckerrohr oder Mais eingesetzt werden können, weil sie die Kulturpflanzen zu stark schädigen.

Herbizide der allgemeinen Formel (I) sind z.B. aus WO-A 00/21924 und WO-A 01/7422 bekannt.

Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Die Verbindungen der Formel (II) sind z.B. aus EP-A-0 333 131 (ZA-89/1960), EP-A-0 269 806 (US-A-4,891,057), EP-A-0 346 620 (AU-A-89/34951), EP-A-0 174 562, EP-A-0 346 620 (WO-A-91/08 202), WO-A-91/07 874 oder WO-A 95/07 897 (ZA 94/7120) und der dort zitierten Literatur bekannt oder können nach oder analog den dort beschriebenen Verfahren hergestellt werden. Die Verbindungen der Formel (III) sind aus EP-A-0 086 750, EP-A-0 94349 (US-A-4,902,340), EP-A-0 191 736 (US-A-4,881,966) und EP-A-0 492 366 und dort zitierter Literatur bekannt oder können nach oder analog den dort beschriebenen Verfahren hergestellt werden. Einige Verbindungen sind ferner in EP-A-0 582 198 beschrieben. Die Verbindungen der Formel (II) sind aus zahlreichen Patentanmeldungen bekannt, beispielsweise US-A-4,021,224 und US-A-4,021,229. Verbindungen der Gruppe (b) sind weiterhin aus CN-A- 87/102 789, EP-A-0 365 484 sowie aus "The Pesticide Manual", The British Crop Protection Council and the Royal Society of Chemistry, 11th edition, Farnham 1997, bekannt. Die Verbindungen der Gruppe (c) sind in der WO-A-97/45016, die der Gruppe (d) in der deutschen Patentanmeldung 197 42 951.3 und die der Gruppe (e) in der WO-A 98/13 361 beschrieben.

Die zitierten Schriften enthalten ausführliche Angaben zu Herstellungsverfahren und Ausgangsmaterialien. Auf diese Schriften wird ausdrücklich Bezug genommen, sie gelten durch Zitat als Bestandteil dieser Beschreibung.

Im Rahmen der vorliegenden Anmeldung sind die Begriffe "Herbizide Mittel" und "Herbizid-Safener-Kombinationen" als gleichbedeutend zu verstehen.

Bevorzugt sind herbizide Mittel, enthaltend Verbindungen der Formel (I), worin die Symbole und Indizes folgende Bedeutungen haben:
- R¹: ist Nitro, Cyano, Chlor, Fluor, Methyl, Trifluormethyl, Methylsulfonyl, Ethylsulfonyl;
- R²: ist Pentafluorethoxymethyl, 2,2-Difluorethoxymethyl, 2,2,2-Trifluorethoxymethyl, 2,2,3,3-Tetrafluorpropoxymethyl, Cyclopentyloxymethyl, Cyclohexyloxy-methyl, Cyclopropyloxy, Tetrahydrofuran-2-yl-methoxymethyl, Methoxyethoxyethoxymethyl, oder durch einen Rest aus der Gruppe Cyanomethyl, Ethoxymethyl und Methoxymethyl substituiertes 4,5-Dihydroisoxazol-3-yl;
- R³: ist OR⁵;
- R⁵: ist Wasserstoff;
- a: ist 2;
- b: ist 0, und wobei sich die zwei Reste R¹ in 2- und 4- Position des Phenylrings

befinden.

Bevorzugt sind ebenfalls herbizide Mittel, enthaltend Safener der Formel (II) und/oder(III), worin die Symbole und Indizes folgende Bedeutungen haben:
- R²⁴: ist Wasserstoff, (C₁-C₁₈)-Alkyl, (C₃-C₁₂)-Cycloalkyl, (C₂-C₈)-Alkenyl und (C₂₋C₁₈)-Alkinyl, wobei die C-haltigen Gruppen durch einen oder mehrere, vorzugsweise bis zu drei, Reste R⁵⁰ substituiert sein können;
- R⁵⁰: ist gleich oder verschieden Halogen, Hydroxy, (C₁-C₈)-Alkoxy, (C₁-C₈)-Alkylthio, (C₂-C₈)-Alkenylthio, (C₂-C₈)-Alkinylthio, (C₂-C₈)-Alkenyloxy, (C₂-C₈)-Alkinyloxy, (C₃-C₇)-Cycloalkyl, (C₃-C₇)-Cycloalkoxy, Cyano, Mono- und Di-(C₁₋C₄)-alkylamino, Carboxy, (C₁-C₈)-Alkoxycarbonyl, (C₂-C₈)-Alkenyloxycarbonyl, (C₁-C₈)-Alkylthiocarbonyl, (C₂-C₈)-Alkinyloxycarbonyl, (C₁-C₈)-Alkylcarbonyl, (C₂-C₈)-Alkenylcarbonyl, (C₂-C₈)-Alkinylcarbonyl, 1-(Hydroxyimino)-(C₁-C₆)-alkyl, 1-[(C₁-C₄)-Alkylimino]-(C₁-C₄)-alkyl, 1-[(C₁-C₄)-Alkoxyimino]-(C₁-C₆)-alkyl, (C₁-C₈)-Alkylcarbonylamino, (C₂-C₈)-Alkenylcarbonylamino, (C₂-C₈)-Alkinylcarbonylamino, Aminocarbonyl, (C₁-C₈)-Alkylaminocarbonyl, Di-(C₁-C₆)-alkylaminocarbonyl, (C₂-C₆)-Alkenylaminocarbonyl, (C₂-C₆-Alkinylaminocarbonyl, (C₁-C₈)-Alkoxycarbonylamino, (C₁-C₈)-Alkylaminocarbonylamino, (C₁-C₆)-Alkylcarbonyloxy, das unsubstituiert oder durch R⁵¹ substituiert ist, (C₂-C₆)-Alkenylcarbonyloxy, (C₂-C₆)-Alkinylcarbonyloxy, (C₁-C₈)-Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch Reste R⁵² substituiert sind; SiR'₃, -O-SiR'₃, R'₃Si-(C₁-C₈)-alkoxy, -CO-O-NR'₂, -O-N=CR'₂, -N=CR'₂, -O-NR'₂, -NR'₂, CH(OR')₂. -O-(CH₂)ₘ-CH(OR')₂, -CR'''(OR')₂ , -O-(CH₂)ₘCR'''(OR'')₂ oder durch R"O-CHR"'CHCOR"-(C₁-C₆)-alkoxy,
- R⁵¹: ist gleich oder verschieden Halogen, Nitro, (C₁-C₄)-Alkoxy und unsubstituiertes oder mit einem oder mehreren, vorzugsweise bis zu drei Resten R⁵¹ substituiertes Phenyl;
- R⁵²: ist gleich oder verschieden Halogen, (C₁-C₄)-Alkyl, (C₁-C₄)-Alkoxy, (C₁-C₄)-Haloalkyl, (C₁-C₄)-Haloalkoxy oder Nitro;
- R': ist gleich oder verschieden Wasserstoff, (C₁-C₄)-Alkyl, unsubstituiertes oder durch einen oder mehrere, vorzugsweise bis zu drei, Reste R⁵² substituiertes Phenyl oder zwei Reste R' bilden zusammen eine (C₂-C₆)-Alkandiylkette;
- R": ist gleich oder verschieden (C₁-C₄)-Alkyl oder zwei Reste R" bilden zusammen eine (C₂-C₆)-Alkandiylkette;
- R"': ist Wasserstoff oder (C₁-C₄)-Alkyl;
- m: ist 0, 1, 2, 3, 4, 5 oder 6.

Besonders bevorzugt sind herbizide Mittel, enthaltend Safener der Formel (II) und/oder (III), worin die Symbole und Indizes folgende Bedeutungen haben:
- R ²⁴: ist Wasserstoff, (C₁-C₈)-Alkyl oder (C₃-C₇)-Cycloalkyl, wobei die vorstehenden C-haltigen Reste unsubstituiert sind oder ein- oder mehrfach durch Halogen oder ein- oder zweifach, vorzugsweise einfach, durch Reste R⁵⁰ substituiert sind;
- R⁵⁰: ist gleich oder verschieden Hydroxy, (C₁-C₄)-Alkoxy, Carboxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl und 1-[(C₁-C₄)-Alkoxyimino]-(C₁-C₄)-alkyl; -SiR'₃, -O-N=CR'₂, -N=CR'₂, -NR'₂, und-O-NR'₂, worin R' gleich oder verschieden Wasserstoff, (C₁-C₄)-Alkyl oder paarweise eine (C₄-C₅)-Alkandiylkette bedeutet;
- R²⁷, R²⁸, R²⁹: sind gleich oder verschieden Wasserstoff, (C₁-C₈)-Alkyl, (C₁-C₆)-Haloalkyl, (C₃-C₇)-Cycloalkyl oder Phenyl, das unsubstituiert oder durch einen oder mehrere Reste aus der Gruppe Halogen, Cyano, Nitro, Amino, Mono- und Di-[(C₁-C₄)alkyl]-amino, (C₁-C₄)-Alkyl, (C₁-C₄)-Haloalkyl, (C₁-C₄)-Alkoxy, (C₁-C₄)-Haloalkoxy, (C₁-C₄)-Alkylthio und (C₁-C₄)-Alkylsulfonyl substituiert ist;
- R¹⁷, R¹⁹: sind gleich oder verschieden Wasserstoff, Halogen, Methyl, Ethyl, Methoxy, Ethoxy, (C₁ oder C₂)-Haloalkyl, vorzugsweise Wasserstoff, Halogen oder (C₁ oder C₂)-Haloalkyl.

Ganz besonders bevorzugt sind herbizide Mittel, enthaltend Safener der Formel (II), worin die Symbole und Indizes folgende Bedeutungen haben:
- R¹⁷: ist Wasserstoff, Halogen, Nitro oder (C₁-C₄)-Haloalkyl;
- n': ist 1, 2 oder 3;
- R¹⁸: ist ein Rest der Formel OR²⁴;
- R²⁴: ist Wasserstoff, (C₁-C₈)-Alkyl oder (C₃-C₇)-Cycloalkyl, wobei die vorstehenden C-haltigen Reste unsubstituiert sind oder ein- oder mehrfach, vorzugsweise bis zu dreifach, durch gleiche oder verschiedene Halogen-Reste oder bis zu zweifach, vorzugsweise einfach, durch gleiche oder verschiedene Reste aus der Gruppe Hydroxy, (C₁-C₄)-Alkoxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl, 1-[(C₁-C₄)-Alkoxyimino]-(C₁-C₄)-alkyl und Reste der Formeln -SiR'₃, -O-N=R'₂, -N=CR'₂, -NR'₂ und -O-NR'₂ substituiert sind, wobei die Reste R' in den genannten Formeln gleich oder verschieden Wasserstoff, (C₁-C₄)-Alkyl oder paarweise (C₄ oder C₅)-Alkandiyl bedeuten;
- R²⁷, R²⁸, R²⁹: sind gleich oder verschieden Wasserstoff, (C₁-C₈)-Alkyl, (C₁-C₆)-Haloalkyl, (C₃-C₇)-Cycloalkyl oder Phenyl, das unsubstituiert oder durch einen oder mehrere der Reste aus der Gruppe Halogen, (C₁-C₄)-Alkyl, (C₁-C₄)-Alkoxy, Nitro, (C₁-C₄)-Haloalkyl und (C₁-C₄)-Haloalkoxy substituiert ist:

Ganz besonders bevorzugt sind auch herbizide Mittel, enthaltend Safener der Formel (III), worin die Symbole und Indizes folgende Bedeutungen haben:
- R¹⁹: ist Wasserstoff, Halogen oder (C₁-C₄)-Haloalkyl;
- n': ist 1, 2 oder 3, wobei (R¹⁹)_{n'} vorzugsweise 5-Cl ist;
- R²⁰: ist ein Rest der Formel OR²⁴;
- T: ist CH₂ und
- R²⁴: ist Wasserstoff, (C₁-C₈)-Alkyl, (C₁-C₈)-Haloalkyl oder (C₁-C₄)-Alkoxy-(C₁-C₄)-alkyl, vorzugsweise (C₁-C₈)Alkyl.

Insbesondere bevorzugt sind herbizide Mittel, enthaltend Safener der Formel (II), worin die Symbole und Indizes folgende Bedeutungen haben:
- W: ist (W1);
- R¹⁷: ist Wasserstoff, Halogen oder (C₁-C₂)-Haloalkyl;
- n': ist 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)-Alkyl, (C₁-C₄)-Haloalkyl, (C₁-C₄)-Hydroxyalkyl, (C₃-C₇)-Cycloalkyl, (C₁-C₄)-Alkoxy-(C₁-C₄)-alkyl oder Tri-(C₁-C₂)-alkylsilyl, vorzugsweise (C₁-C₄)-Alkyl;
- R²⁷: ist Wasserstoff, (C₁-C₈)-Alkyl, (C₁-C₄)-Haloalkyl oder (C₃-C₇)-Cycloalkyl, vorzugsweise Wasserstoff oder (C₁-C₄)-Alkyl, und
- R²⁶: ist Wasserstoff oder (C₁-C₄)-Alkyl.

Insbesondere bevorzugt sind auch herbizide Mittel, enthaltend Safener der Formel (II), worin die Symbole und Indizes folgende Bedeutungen haben:
- W: ist (W2);
- R¹⁷: ist Wasserstoff, Halogen oder (C₁-C₂)-Haloalkyl;
- n': ist 1, 2 oder 3, wobei (R¹⁷)_{n'} vorzugsweise 2,4-Cl₂ ist;
- R¹⁸: ist ein Rest der Formel OR²⁴;
- R²⁴: ist Wasserstoff, (C₁-C₈)-Alkyl, (C₁-C₄)-Hatoalkyl, (C₁-C₄)-Hydroxyalkyl, (C₃₋C₇)-Cycloalkyl, (C₁-C₄-Alkoxy)-C₁-C₄-alkyl oder Tri-(C₁-C₂)-alkyl-silyl, vorzugsweise (C₁-C₄)-Alkyl, und
- R²⁷: ist Wasserstoff, (C₁-C₈)-Alkyl, (C₁-C₄)-Haloalkyl, (C₃-C₇)-Cycloalkyl oder Phenyl, vorzugsweise Wasserstoff oder (C₁-C₄)-Alkyl.

Insbesondere bevorzugt sind auch herbizide Mittel, enthaltend Safener der Formel (II), worin die Symbole und Indizes folgende Bedeutungen haben:
- W: ist (W3);
- R¹⁷: ist Wasserstoff, Halogen oder (C₁-C₂)-Haloalkyl;
- n': ist 1, 2 oder 3, wobei (R¹⁷)ₙ, vorzugsweise 2,4-Cl₂ ist;
- R¹⁸: ist ein Rest der Formel OR²⁴;
- R²⁴: ist Wasserstoff, (C₁-C₈)-Alkyl, (C₃-C₇)-Cycloalkyl, vorzugsweise (C₁-C₄)-Alkyl, und
- R²⁸: ist (C₁-C₈)-Alkyl oder (C₁-C₄)-Haloalkyl, vorzugsweise C₁-Haloalkyl.

Insbesondere bevorzugt sind auch herbizide Mittel, enthaltend Safener der Formel (II), worin die Symbole und Indizes folgende Bedeutung haben:
- W: ist (W4);
- R¹⁷: ist Wasserstoff, Halogen, Nitro, (C₁-C₄)-Alkyl, (C₁-C₂)-Haloalkyl, vorzugsweise CF₃;
- n': ist 1, 2 oder 3;
- m': ist 0 oder 1;
- R¹⁸: ist ein Rest der Formel OR²⁴ ;
- R²⁴: ist Wasserstoff, (C₁-C₄)-Alkyl, Carboxy-(C₁-C₄)-alkyl, (C₁-C₄)-Alkoxycarbonyl-(C₁-C₄)-alkyl, vorzugsweise (C₁-C₄)-Alkoxy-CO-CH₂-, (C₁-C₄)-Alkoxy-COC(CH₃)H-, HO-CO-CH₂- oder HO-CO-C(CH₃)H-, und
- R²⁹: ist Wasserstoff, (C₁-C₄)-Alkyl, (C₁-C₄)-Haloalkyl, (C₃-C₇)-Cycloalkyl oder Phenyl, das unsubstituiert oder durch einen oder mehrere der Reste aus der Gruppe Halogen, (C₁-C₄)-Alkyl, (C₁-C₄)-Haloalkyl, Nitro, Cyano und (C₁-C₄)-Alkoxy substituiert ist.

Folgende Gruppen von Verbindungen sind insbesondere als Safener für die herbiziden Wirkstoffe der Formel (I) geeignet:
a) Verbindungen vom Typ der Dichlorphenylpyrazolin-3-carbonsäure (d.h. der Formel (II), worin W = W1 und (R¹⁷)_{n'} = 2,4-Cl₂), vorzugsweise Verbindungen wie 1-(2,4-Dichlorphenyl)-5-(ethoxycarbonyl)-5-methyl-2-pyrazolin-3-carbonsäureethylester (II-1), und verwandte Verbindungen, wie sie in der WO-A 91/07874 beschrieben sind;
b) Derivate der Dichlorphenylpyrazofcarbonsäure (d.h. der Formel (II), worin W = (W2) und (R¹⁷)_{n'} = 2,4-Cl₂ ist, vorzugsweise Verbindungen wie 1-(2,4-Dichlorphenyl)-5-methyl-pyrazol-3-carbonsäureethylester (II-2), 1-(2,4-Dichlorphenyl)-5-isopropyl-pyrazol-3-carbonsäureethylester (II-3), 1-(2,4-Dichlorphenyl)-5-(1,1-dimethyl-ethyl)pyrazol-3-carbonsäureethylester (II-4), 1-(2,4-Dichlorphenyl)-5-phenyl-pyrazol-3-carbonsäureethylester (II-5) und verwandte Verbindungen, wie sie in EP-A-0 333 131 und EP-A-0 269 806 beschrieben sind.
c) Verbindungen vom Typ der Triazolcarbonsäuren (d.h. der Formel (II), worin W = (W3) und (R¹⁷)_{n'} = 2,4-Cl₂ ist), vorzugsweise Verbindungen wie Fenchlorazol, d.h. 1-(2,4-Dichlorphenyl)-5-trichlormethyl-(1H)-1,2,4-triazol-3-carbonsäureethylester (II-6), und verwandte Verbindungen (siehe EP-A-0 174 562 und EP-A-0 346 620);
d) Verbindungen vom Typ der 5-Benzyl- oder 5-Phenyl-2-isoxazolin-3-carbonsäure oder der 5,5-Diphenyl-2-isoxazolin-3-carbonsäure, (worin W = (W4) ist), vorzugsweise Verbindungen wie 5-(2,4-Dichlorbenzyl)-2-isoxazolin-3-carbonsäureethylester (II-7) oder 5-Phenyl-2-isoxazolin-3-carbonsäureethylester (II-8) und verwandte Verbindungen, wie sie in WO-A-91/08202 beschrieben sind, oder der 5,5-Diphenyl-2-isoxazolin-3-carbonsäureethylester (II-9) oder -n-propylester (II-10) oder der 5-(4-Fluorphenyl)-5-phenyl-2-isoxazolin-3-carbonsäureethylester (II-11), wie sie in der WO-A-95/07897 beschrieben sind.
e) Verbindungen vom Typ der 8-Chinolinoxyessigsäure, z.B. solche der Formel (III), worin (R¹⁹)_{n'} = 5-Cl, Wasserstoff, R²⁰ = OR²⁴ und T = CH₂ ist, vorzugsweise die Verbindungen
   (5-Chlor-8-chinolinoxy)essigsäure-(1-methylhexyl)-ester (III-1, Cloquintocetmexyl),
   (5-Chlor-8-chinolinoxy)essigsäure-(1,3-dimethyl-but-1-yl)-ester (III-2),
   (5-Chlor-8-chinolinoxy)essigsäure-4-allyl-oxy-butylester (III-3),
   (5-Chlor-8-chinolinoxy)essigsäure-1-allyloxy-prop-2-ylester (III-4),
   (5-Chlor-8-chinolinoxy)essigsäureethylester (III-5),
   (5-Chlor-8-chinolinoxy)essigsäuremethylester (III-6),
   (5-Chlor-8-chinolinoxy)essigsäureallylester (III-7),
   (5-Chlor-8-chinolinoxy)essigsäure-2-(2-propyliden-iminoxy)-1-ethylester (III-8),
   (5-Chlor-8-chinolinoxy)essigsäure-2-oxo-prop-1-ylester (III-9)
   und verwandte Verbindungen, wie sie in EP-A-0 860 750, EP-A-0 094 349 und EP-A-0 191 736 oder EP-A-0 492 366 beschrieben sind.
f) Verbindungen vom Typ der (5-Chlor-8-chinolinoxy)-malonsäure, d.h. der Formel (III), worin (R¹⁷)_{n'} = 5-Cl, R²⁰= OR²⁴, T = -CH(COO-Alkyl)- ist, vorzugsweise die Verbindungen (5-Chlor-8-chinolinoxy)-malonsäurediethylester, (5-Chlor-8-chinolinoxy)-malonsäurediallylester, (5-Chlor-8-chinolinoxy)-malonsäure-methyl-ethylester und verwandte Verbindungen, wie sie in EP-A-0 582 198 beschrieben sind.
g) Verbindungen vom Typ der Dichloracetamide, d.h. der Formel (IV), vorzugsweise:
   N,N-Diallyl-2,2-dichloracetamid (Dichlormid, aus US-A 4,137,070),
   4-Dichloracetyl-3,4-dihydro-3-methyl-2H-1,4-benzoxazin (Benoxacor, aus EP 0 149 974),
   N1,N2-Diallyl-N2-dichloracetylglycinamid (DKA-24, aus HU 2143821), 4-Dichloracetyl-1-oxa-4-aza-spiro[4,5]decan (AD-67),
   2,2-Dichlor-N-(1,3-dioxolan-2-ylmethyl)-N-(2-propenyl)acetamid (PPG-1292),
   3-Dichloracetyl-2,2,5-trimethyloxazolidin,
   3-Dichloracetyl-2,2-dimethyl-5-phenyloxazolidin,
   3-Dichloracetyl-2,2-dimethyl-5-(2-thienyl)oxazolidin,
   3-Dichloracetyl-5-(2-furanyl-)2,2-dimethyloxazolidin (Furilazole, MON 13900),
   1-Dichloracetyl-hexahydro-3,3,8a-trimethylpyrrolo[1,2-a]pyrimidin-6(2H)-on (Dicyclonon, BAS 145138),
h) Verbindungen der Gruppe B(b), vorzugsweise
   1,8-Naphthalsäureanhydrid,
   Methyl-diphenylmethoxyacetat,
   Cyanomethoxyimino(phenyl)acetonitril (Cyometrinil),
   1,3-Dioxolan-2-ylmethoxyimino(phenyl)acetonitril (Oxabetrinil),
   4'-Chlor-2,2,2-trifluoracetophenon O-1,3-dioxolan-2-ylmethyloxim (Fluxofenim),
   4,6-Dichlor-2-phenylpyrimidin (Fenclorim),
   Benzyl-2-chlor-4-trifluormethyl-1,3-thiazol-5-carboxylat (Flurazole),
   2-Dichlormethyl-2-methyl-1,3-dioxolan (MG-191),
   N-(4-Methylphenyl)-N'-(1-methyl-1-phenylethyl)harnstoff (Dymron),
   1-[4-(N-2-Methoxybenzoylsulfamoyl)phenyl]-3-methylhamstoff,
   1-[4-(N-2-Methoxybenzoylsulfamoyl)phenyl]-3,3-dimethylhamstoff,
   1-[4-(N-4,5-Dimethylbenzoylsulfamoyl)phenyl]-3-methylhamstoff,
   1-[4-(N-Naphthoylsulfamoyl)phenyl]-3,3-dimethylhamstoff,
   (2,4-Dichlorphenoxy)essigsäure (2,4-D), (4-Chlorphenoxy)essigsäure,
   (R,S)-2-(4-Chlor-o-tolyloxy)propionsäure (Mecoprop),
   4-(2,4-Dichlorphenoxy)buttersäure (2,4-DB),
   (4-Chlor-o-tolyloxy)essigsäure (MCPA),
   4-(4-Chlor-o-tolyloxy)buttersäure,
   4-(4-Chlorphenoxy)buttersäure,
   3,6-Dichlor-2-methoxybenzoesäure (Dicamba),
   1-(Ethoxycarbonyl)ethyl 3,6-dichlor-2-methoxybenzoat (Lactidichlor)
   sowie deren Salze und Ester, vorzugsweise (C₁-C₈).

Bevorzugt sind als Safener weiterhin Verbindungen der Formel (V) oder deren Salze, worin
- R³⁰: Wasserstoff, (C₁-C₆)-Alkyl, (C₃-C₆)-Cycloalkyl, wobei jeder der letztgenannten 2 Reste unsubstituiert oder durch einen oder mehrere Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert ist;
- R³¹: Wasserstoff;
- R³²: Halogen, Halogen-(C₁-C₄)-alkyl, Halogen-(C₁-C₄)-alkoxy, (C₁-C₄)-Alkyl, (C₁₋C₄)-Alkoxy, (C₁-C₄)-Alkylsulfonyl, (C₁-C₄)-Alkoxycarbonyl oder (C₁-C₄)-Alkylcarbonyl, vorzugsweise Halogen, (C₁-C₄)-Halogenalkyl, wie Trifluormethyl, (C₁-C₄)-Alkoxy, Halogen-(C₁-C₄)-alkoxy, (C₁-C₄)-Alkoxycarbonyl oder (C₁-C₄)-Alkylsulfonyl;
- R³³: Wasserstoff;
- R34: Halogen, (C₁-C₄)-Alkyl, Halogen-(C₁-C₄)-alkyl, Halogen-(C₁-C₄)-alkoxy, (C₃₋C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl, vorzugsweise Halogen, (C₁-C₄)-Alkyl, (C₁-C₄)-Halogenalkyl, wie Trifluormethyl, Halogen-(C₁-C₄)-alkoxy, (C₁-C₄)-Alkoxy oder (C₁-C₄)-Alkylthio,
- n: 0, 1 oder 2 und
- m: 1 oder 2 bedeuten.

Weiterhin bevorzugt sind Safener der Formel (VI), in der
- X³: CH;
- R³⁵: Wasserstoff, (C₁-C₆)-Alkyl, (C₃-C₆)-Cycloalkyl, (C₂-C₆)-Alkenyl, (C₅-C₆)-Cycloalkenyl, Phenyl oder 3- bis 6-gliedriges Heterocyclyl mit bis zu drei Heteroatomen aus der Gruppe Stickstoff, Sauerstoff und Schwefel, wobei die sechs letztgenannten Reste gegebenenfalls durch einen oder mehrere, gleiche oder verschiedene Substituenten aus der Gruppe Halogen, (C₁-C₆)-Alkoxy, (C₁-C₆)-Haloalkoxy, (C₁-C₂)-Alkylsulfinyl, (C₁-C₂)-Alkylsulfonyl, (C₃₋C₆)-Cycloalkyl, (C₁-C₄)-Alkoxycarbonyl, (C₁-C₄)-Alkylcarbonyl und Phenyl und im Falle cyclischer Reste auch (C₁-C₄)-Alkyl und (C₁-C₄)-Haloalkyl substituiert sind;
- R³⁶: Wasserstoff, (C₁-C₆)-Alkyl, (C₂-C₆)-Alkenyl, (C₂-C₆)-Alkinyl, wobei die drei letztgenannten Reste gegebenenfalls durch einen oder mehrere, gleiche oder verschiedene Substituenten aus der Gruppe Halogen, Hydroxy, (C₁₋C₄)-Alkyl, (C₁-C₄)-Alkoxy und (C₁-C₄)-Alkylthio substituiert sind;
- R³⁷: Halogen, (C₁-C₄)-Haloalkyl, (C₁-C₄)-Haloalkoxy, Nitro, (C₁-C₄)-Alkyl, (C₁-C₄)-Alkoxy, (C₁-C₄)-Alkylsulfonyl, (C₁-C₄)-Alkoxycarbonyl oder (C₁-C₄)-Alkylcarbonyl;
- R³⁸: Wasserstoff;
- R³⁹: Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl;
- r: 0, 1 oder 2 und
- q: 1 oder 2

bedeuten.

Besonders bevorzugt als Safener sind weiterhin Verbindungen der Formel (VII),
in welcher
- R⁴⁰: Trifluormethyl bedeutet,
- R⁴¹: Wasserstoff bedeutet und
- R⁴²: Wasserstoff, Methyl oder Ethyl bedeutet.

Die hier als Safener (Antidote) genannten Verbindungen, reduzieren oder unterbinden phytotoxische Effekte, die beim Einsatz der herbiziden Wirkstoffe der Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert und z.B. auf Kulturen wie Weizen, Gerste, Mais und Zuckerrohr ausgedehnt werden, in denen bisher ein Einsatz der Herbizide nicht möglich oder nur beschränkt, das heißt, in niedrigen Dosierungen mit wenig Breitenwirkung möglich war.

Die herbiziden Wirkstoffe und die erwähnten Safener können zusammen (als fertige Formulierung oder im Tank-Mix-Verfahren) oder in beliebiger Reihenfolge nacheinander ausgebracht werden. Das Gewichtsverhältnis Safener zu herbizider Wirkstoff kann innerhalb weiter Grenzen variieren und ist vorzugsweise im Bereich von 1:100 bis 100:1, insbesondere von 1:10 bis 10:1. Die jeweils optimalen Mengen an herbizidem Wirkstoff und Safener sind vom Typ des verwendeten herbiziden Wirkstoffs oder vom verwendeten Safener sowie von der Art des zu behandelnden Pflanzenbestandes abhängig und lassen sich von Fall zu Fall durch einfache, routinemäßige Vorversuche ermitteln.

Haupteinsatzgebiete für die Anwendung der erfindungsgemäßen Kombinationen sind vor allem Mais, Zuckerrohr und Getreidekulturen wie z.B. Weizen, Roggen, Gerste, Hafer, Reis, Sorghum, aber auch Baumwolle und Sojabohne, vorzugsweise Zuckerrohr, Getreide, Reis und Mais.

Die erfindungsgemäß eingesetzten Safener können je nach ihren Eigenschaften zur Vorbehandlung des Saatgutes der Kulturpflanze (Beizung der Samen) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung- der Anbaufläche vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 0,5 kg Wirkstoff je Hektar.

Gegenstand der vorliegenden Erfindung ist deshalb auch ein Verfahren zum Schutz von Kulturpflanzen vor phytotoxischen Nebenwirkungen von Herbiziden der Formel (I), das dadurch gekennzeichnet ist, daß eine antidotisch wirksame Menge einer Verbindung der Formel (II), (III), (IV), (V), (VI), (VII) und/oder aus der Gruppe (b) vor, nach oder gleichzeitig mit dem herbiziden Wirkstoff A der Formel (I) auf die Pflanzen, Pflanzensamen oder die Anbaufläche appliziert wird.

Die erfindungsgemäße Herbizid-Safener Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Emtegut hinsichtlich Menge, Qualität, Lagerfähigkeit, Zusammensetzung und spezieller Inhaltsstoffe. So sind transgene Pflanzen mit erhöhtern Stärkegehalt oder veränderter Qualität der Stärke oder solche mit anderer Fettsäurezusammensetzung des Emteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, z.B. ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Kombination zur Bekämpfung von Schadpflanzen in transgenen Kulturpflanzen.

Die Safener der Formeln (II) - (VII) und aus der Gruppe (b) und deren Kombinationen mit einem oder mehreren der genannten herbiziden Wirkstoffe der Formel (I) können auf verschiedene Art formuliert werden, je nachdem welche biologischen und/oder chemisch-physikalischen Parameter vorgegeben sind. Als Formulierungsmöglichkeiten kommen beispielsweise in Frage:
Spritzpulver (WP), emulgierbare Konzentrate (EC), wasserlösliche Pulver (SP), wasserlösliche Konzentrate (SL), konzentrierte Emulsionen (BW) wie Öl-in-Wasser und Wasser-in-öl-Emulsionen, versprühbare Lösungen oder Emulsionen, Kapselsuspensionen (CS), Dispersionen auf Öl- oder Wasserbasis (SC), Suspoemulsionen, Suspensionskonzentrate, Stäubemittel (DP), ölmischbare Lösungen (OL), Beizmittel, Granulate (GR) in Form von Mikro-, Sprüh-, Aufzugs- und Adsorptionsgranulaten, Granulate für die Boden- bzw. Streuapplikation, wasserlösliche Granulate (SG), wasserdispergierbare Granulate (WG), ULV-Formulierungen, Mikrokapseln und Wachse.

Diese einzelnen Formulierungstypen sind im Prinzip bekannt und beispielsweise beschrieben in: Winnacker-Küchler, "Chemische Technologie" Band 7, C. Hauser Verlag München, 4. Aufl. 1986; Wade van Valkenburg, "Pesticide Formulations", Marcel Dekker N.Y., 1973; K. Martens, "Spray Drying Handbook", 3rd Ed. 1979, G. Goodwin Ltd. London.

Die gegebenenfalls notwendigen Formulierungshilfsmittel, wie Inertmaterialien, Tenside, Lösungsmittel und weitere Zusatzstoffe, sind ebenfalls bekannt und beispielsweise beschrieben in: Watkins, "Handbook of Insecticide Dust Diluents and Carriers", 2nd Ed., Darland Books, Caldwell N.J., H.v. Olphen, "Introduction to Clay Colloid Chemistry"; 2nd Ed., J. Wiley & Sons, N.Y.; C. Marsden, "Solvents Guide"; 2nd Ed., Interscience, N.Y. 1963; McCutcheon's "Detergents and Emulsifiers Annual", MC Publ. Corp., Ridgewood N.J.; Sisley and Wood, "Encyclopedia of Surface Active Agents", Chem. Publ. Co. lnc., N.Y. 1964; Schönfeldt, "Grenzflächenaktive Äthylenoxidaddukte", Wiss. Vedagsgesell., Stuttgart 1976; Winnacker-Küchler, "Chemische Technologie", Band 7, C. Hauser Verlag München, 4. Aufl. 1986.

Auf der Basis dieser Formulierungen lassen sich auch Kombinationen mit anderen als Pflanzenschutzmitteln wirksamen Stoffen, wie Insektiziden, Akariziden, Herbiziden, Fungiziden, sowie mit Safenern, Düngemitteln und/oder Wachstumsregulatoren herstellen, z.B. in Form einer Fertigformulierung oder als Tankmix.

Spritzpulver sind in Wasser gleichmäßig dispergierbare Präparate, die neben dem Wirkstoff außer einem Verdünnungs- oder Inertstoff noch Tenside ionischer und/oder nichtionischer Art (Netzmittel, Dispergiermittel), z.B. polyoxyethylierte Alkylphenole, polyoxethylierte Fettalkohole, polyoxethylierte Fettamine, Fettalkoholpolyglykolethersulfate, Alkansulfonate, Alkylbenzolsulfonate, ligninsulfonsaures Natrium, 2,2'-dinaphthylmethan-6,6'-disulfonsaures Natrium, dibutylnaphthalin-sulfonsaures Natrium oder auch oleoylmethyltaurinsaures Natrium enthalten. Zur Herstellung der Spritzpulver werden die herbiziden Wirkstoffe beispielsweise in üblichen Apparaturen, wie Hammermühlen, Gebläsemühlen und Luftstrahlmühlen, feingemahlen und gleichzeitig oder anschließend mit den Formulierungshilfsmitteln vermischt.

Emulgierbare Konzentrate werden z.B. durch Auflösen des Wirkstoffes in einem organischen Lösungsmittel, wie Butanol, Cyclohexanon, DMF oder auch höher siedende Kohlenwasserstoffe wie gesättigte oder ungesättigte Aliphaten oder Alicyclen, Aromaten oder Mischungen der organischen Lösungsmittel unter Zusatz von einem oder mehreren Tensiden ionischer und/oder nichtionischer Art (Emulgatoren) hergestellt. Als Emulgatoren können beispielsweise verwendet werden: Alkylarylsulfonsaure Calzium-Salze, wie Ca-dodecylbenzolsulfonat, oder nichtionische Emulgatoren, wie Fettsäurepolyglykolester, Alkylarylpolyglykolether, Fettalkoholpolyglykolether, Propylenoxid-Ethylenoxid-Kondensationsprodukte, Alkylpolyether, Sorbitanester, wie Sorbitanfettsäureester, oder Polyoxyethylensorbitanester, wie Polyoxyethylensorbitanfettsäureester. Stäubemittel erhält man im allgemeinen durch Vermahlen des Wirkstoffes mit fein verteilten festen Stoffen, z.B. Talkum, natürlichen Tonen, wie Kaolin, Bentonit und Pyrophyllit, oder Diatomeenerde.

Suspensionskonzentrate können auf Wasser- oder Ölbasis sein. Sie können beispielsweise durch Naß-Vermahlung mittels handelsüblicher Perlmühlen und gegebenenfalls Zusatz von Tensiden, wie sie z.B. bei den anderen Formulierungstypen bereits aufgeführt sind, hergestellt werden.

Emulsionen, z.B. Öl-in-Wasser Emulsionen (EW), lassen sich beispielsweise mittels Rührem, Kolloidmühlen und/oder statischen Mischem unter Verwendung von wäßrigen organischen Lösungsmitteln und gegebenenfalls Tensiden, wie sie z.B. bei den anderen Formulierungstypen bereits aufgeführt sind, herstellen.

Granulate können entweder durch Verdüsen des Wirkstoffes auf adsorptionsfähiges, granuliertes Inertmaterial hergestellt werden oder durch Aufbringen von Wirkstoffkonzentraten mittels Klebemitteln, z.B. Polyvinylalkohol, polyacrylsaurem Natrium oder auch Mineralölen, auf die Oberfläche von Trägerstoffen, wie Sand, Kaolinite oder von granuliertem Inertmaterial. Auch können geeignete Wirkstoffe in der für die Herstellung von Düngemittelgranulaten üblichen Weise - gewünschtenfalls in Mischung mit Düngemitteln - granuliert werden. Wasserdispergierbare Granulate werden in der Regel nach den üblichen Verfahren, wie Sprühtrocknung, Wirbelbett-Granulierung, Teller-Granulierung, Mischung mit Hochgeschwindigkeitsmischem und Extrusion ohne festes Inertmaterial, hergestellt.

Zur Herstellung von Teller-, Fließbett-, Extruder- und Sprühgranulaten siehe z.B. in "Spray-Drying Handbook" 3rd ed. 1979, G. Goodwin Ltd., London; J.E. Browning, "Agglomeration", Chemical and Engineering 1967, Seiten 147 ff; "Perry's Chemical Engineer's Handbook", 5th Ed., McGraw-Hill, New York 1973, S. 8-57.

Für weitere Einzelheiten zur Formulierung von Pflanzenschutzmitteln siehe z.B. G.C. Klingman, "Weed Control as a Science", John Wiley and Sons, Inc., New York, 1961, Seiten 81-96 und J.D. Freyer, S.A. Evans, "Weed Control Handbook", 5th Ed., Blackwell Scientific Publications, Oxford, 1968, Seiten 101-103.

Die agrochemischen Zubereitungen enthalten in der Regel 0,1 bis 99 Gew.-%, insbesondere 0,1 bis 95 Gew.-%, Wirkstoffe der Formel (II) - (VII) und/oder (b) oder des Herbizid/Antidot-Wirkstoffgemischs (I) und (II) - (VII) und/oder (b)und 1 bis 99,9 Gew.-%, insbesondere 5 bis 99,8 Gew.-%, eines festen oder flüssigen Zusatzstoffes und 0 bis 25 Gew.-%, insbesondere 0,1 bis 25 Gew.-% eines Tensides.

In Spritzpulvern beträgt die Wirkstoffkonzentration z.B. etwa 10 bis 90 Gew.%, der Rest zu 100 Gew.-% besteht aus üblichen Formulierungsbestandteilen. Bei emulgierbaren Konzentraten beträgt die Konzentration etwa 1 bis 80 Gew.-%. Staubförmige Formulierungen enthalten etwa 1 bis 20 Gew.-% an Wirkstoffen, versprühbare Lösungen etwa 0,2 bis 20 Gew.-% Wirkstoffe. Bei Granulaten, wie wasserdispergierbaren Granulaten, hängt der Wirkstoffgehalt zum Teil davon ab, ob die wirksame Verbindung flüssig oder fest vorliegt. In der Regel liegt der Gehalt bei den in Wasser dispergierbaren Granulaten zwischen 10 und 90 Gew.-%.

Daneben enthalten die genannten Wirkstofformulierungen gegebenenfalls die jeweils üblichen Haft-, Netz-, Dispergier-, Emulgier-, Penetrations-, Konservierungs-, Frostschutz- und Lösungsmittel, Füll-, Träger- und Farbstoffe, Entschäumer, Verdunstungshemmer und den pH-Wert und die Viskosität beeinflussende Mittel.

Als Kombinationspartner für die erfindungsgemäßen Mischungen aus Herbiziden und Safenem in Mischungsformulierungen oder im Tank-Mix sind beispielsweise bekannte Wirkstoffe einsetzbar, wie sie in z.B. Weed Research 26, 441-445 (1986), oder "The Pesticide Manual", 10th edition, The British Crop Protection Council, 1994, und dort zitierter Literatur beschrieben sind. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet):
acetochlor; acifluorfen; aclonifen; AKH 7088, d.h. [[[1-[5-[2-Chloro-4-(trifluoromethyl)-phenoxy]-2-nitrophenyl]-2-methoxyethylidene]-amino]-oxy]-essigsäure und - essigsäuremethylester; alachlor; alloxydim; ametryn; amidosulfuron; amitrol; AMS, d.h. Ammoniumsulfamat; anilofos; asulam; atrazin; azafenidine (DPX-R6447), azimsulfuron (DPX-A8947); aziprotryn; barban; BAS 516 H, d.h. 5-Fluor-2-phenyl-4H-3,1-benzoxazin-4-on; benazolin; benfluralin; benfuresate; bensulfuron-methyl; bensulide; bentazone; benzofluor; benzoylprop-ethyl; benzthiazuron; bialaphos; bifenox; bispyribac-natrium (KIH-2023), bromacil; bromobutide; bromofenoxim; bromoxynil; bromuron; buminafos; busoxinone; butachlor; butamifos; butenachlor; buthidazole; butralin; butroxydim (ICI-0500), butylate; cafenstrole (CH-900); carbetamide; cafentrazone; CDAA, d.h. 2-Chlor-N,N-di-2-propenylacetamid; CDEC, d.h. Diethyldithiocarbaminsäure-2-chlorallylester; chlomethoxyfen; chloramben; chloransulam-methyl (XDE-565), chlorazifop-butyl, chlorbromuron; chlorbufam; chlorfenac; chlorflurecol-methyl; chloridazon; chlorimuron ethyl; chlomitrofen; chlorotoluron; chloroxuron; chlorpropham; chlorsulfuron; chlorthal-dimethyl; chlorthiamid; cinidon-ethyl, cinmethylin; cinosulfuron; clefoxydim, clethodim; clodinafop und dessen Esterderivate (z.B. clodinafop-propargyl); clomazone; clomeprop; cloproxydim; clopyralid; cumyluron (JC 940); cyanazine; cycloate; cyclosulfamuron (AC 014); cycloxydim; cycluron; cyhalofop und dessen Esterderivate (z.B. Butylester, DEH-112); cyperquat; cyprazine; cyprazole; 2,4-DB; dalapon; desmedipham; desmetryn; di-allate; dicamba; dichlobenil; dichlorprop; diclofop und dessen Ester wie diclofop-methyl; diclosulam (XDE-564), diethatyl; difenoxuron; difenzoquat; diflufenican; diflufenzopyr-natrium (SAN-835H), dimefuron; dimethachlor; dimethametryn; dimethenamid (SAN-582H); dimethazone, 5-(4,6-Dimethylpyrimidin-2-yl-carbamoylsulfamoyl)-1-(2-pyridyl)-pyrazol-4-carbonsäuremethylester (NC-330); clomazon; dimethipin; dimetrasulfuron, dinitramine; dinoseb; dinoterb; diphenamid; dipropetryn; diquat; dithiopyr; diuron; DNOC; eglinazine-ethyl; EL 177, d.h. 5-Cyano-1-(1,1-dimethylethyl)-N-methyl-1H-pyrazote-4-carboxamid; endothal; epoprodan (MK-243), EPTC; esprocarb; ethalfluralin; ethametsulfuronmethyl; ethidimuron; ethiozin; ethofumesate; F5231, d.h. N-[2-Chlor-4-fluor-5-[4-(3-fluorpropyl)-4,5-dihydro-5-oxo-1 H-tetrazol-1 -yl]-phenyl]-ethansulfonamid; ethoxyfen und dessen Ester (z.B. Ethylester, HN-252); ethoxysulfuron (aus EP 342569) etobenzanid (HW 52); 3-(4-Ethoxy-6-ethyl-1,3,5-triazin-2-yl)-1-(2,3-dihydro-1,1-dioxo-2-methylbenzo[b]thiophen-7-sulfonyl)hamstoff (EP-A 079 683); 3-(4-Ethyl-6-methoxy-1,3,5-triazin-2-yl)-1-(2,3-dihydro-1,1-dioxo-2-methylbenzo[b]thiophen-7-sulfonyl)hamstoff (EP-A 079.683); fenoprop; fenoxan, fenoxaprop und fenoxaprop-P sowie deren Ester, z.B. fenoxaprop-P-ethyl und fenoxaprop-ethyl; fenoxydim; fentrazamide (NBA-061); fenuron; flamprop-methyl; flazasulfuron; flufenacet (BAY-FOE-5043), fluazifop und fluazifop-P, florasulam (DE-570) und deren Ester, z.B. fluazifop-butyl und fluazifop-P-butyl; fluazolate (Mon-48500), fluchloralin; flucarbazone-natrium; flumetsulam; flumeturon; flumiclorac und dessen Ester (z.B. Pentylester, S-23031); flumioxazin (S-482); flumipropyn; flupoxam (KNW-739); fluorodifen; fluoroglycofen-ethyl; flupropacil (UBIC-4243); flupyrsulfuron-methyl natrium (DPX-KE459), fluridone; flurochloridone; fluroxypyr; flurtamone; fluthiacet-methyl (KIH-9201), fomesafen; fosamine; furyloxyfen; glufosinate; glyphosate; halosafen; halosulfuron und dessen Ester (z.B. Methylester, NC-319); haloxyfop und dessen Ester; haloxyfop-P (= R-haloxyfop) und dessen Ester; hexazinone; imazamethabenz-methyl; imazamox (AC-299263), imazapyr; imazaquin und Salze wie das Ammoniumsalz; imazethamethapyr; imazethapyr; imazosulfuron; iodosulfuron (Methyl-4-iod-2-[3-(4-methoxy-6-methyl-1,3,5-triazin-2-yl)ureidosulfonyl]-benzoat, Natriumsalz, WO 92/13845); ioxynil; isocarbamid; isopropalin; isoproturon; isouron; isoxaben; isoxapyrifop; karbutilate; lactofen; lenacil; linuron; MCPA; MCPB; mecoprop; mefenacet; mefluidid; metamitron; metazachlor; methabenzthiazuron; metham; methazole; methoxyphenone; methyldymron; metobenzuron, Methyl-2-[3-(4,6-dimethoxypyrimidin-2-yl)ureidosutfonyl]-4-methansuffonamidomethylbenzoat (WO 95/10507); methobenzuron; metobromuron; metolachlor; S-metolachlor, metosulam (XRD 511); metoxuron; metribuzin; metsulfuron-methyl; MH; molinate; monalide; monocarbamide dihydrogensulfate; monolinuron; monuron; MT 128, d.h. 6-Chlor-N-(3-chlor-2-propenyl)-5-methyl-N-phenyl-3-pyridazinamin; MT 5950, d.h. N-[3-Chlor-4-(1-methylethyl)-phenyl]-2-methylpentanamid; N,N-Dimethyl-2-[3-(4,6-dimethoxypyrimidin-2-yl)ureidosulfonyl]-4-formylamino-benzamid (WO 95/01344); naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrofluorfen; norflurazon; orbencarb; oryzalin; oxadiargyl (RP-020630); oxadiazon; oxaziclomefone (MY-100), oxyfluorfen; oxasulfuron (CGA-277476), paraquat; pebulate; pendimethalin; pentoxazone (KPP-314), perfluidone; phenisopham; phenmedipham; picloram; piperophos; piributicarb; pirifenop-butyl; pretilachlor; primisulfuron-methyl; pracarbazone-natrium; procyazine; prodiamine; profluralin; proglinazine-ethyl; prometon; prometryn; propachlor; propanil; propaquizafop und dessen Ester; propazine; propham; propisochlor; propyzamide; prosulfalin; prosulfocarb; prosulfuron (CGA-152005); prynachlor; pyraflufen-ethyl (ET-751), pyrazon; pyrazosulfuron-ethyl; pyrazoxyfen; pyribenzoxim, pyridafol; pyridate; pyriminobac-methyl (KIH-6127), pyrithiobac (KIH-2031); pyroxofop und dessen Ester (z.B. Propargylester); quinclorac; quinmerac; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; SN 106279, d.h. 2-[[7-[2-Chlor-4-(trifluor-methyl)-phenoxy]-2-naphthalenyl]-oxy]-propansäure und - methylester, sulfentrazon (FMC-97285, F-6285); sulfazuron; sulfometuron-methyl; sulfosate (ICI-A0224); sulfosulfuron (MON-37500), TCA; tebutam (GCP-5544); tebuthiuron; tepraloxydim (BAS-620H), terbacil; terbucarb; terbuchlor; terbumeton; terbuthylazine; terbutryn; TFH 450, d.h. N,N-Diethyl-3-[(2-ethyl-6-methylphenyl)-sultonyl]-1 H-1,2,4-triazol-1-carboxamid; thenylchlor (NSK-850); thiazafluron; thiazopyr (Mon-13200); thidiazimin (SN-124085); thifensulfuron-methyl; thiobencarb; thiocarbazil; tralkoxydim; tri-allate; triasulfuron, triaziflam (DH-1105); triazofenamide; tribenuron-methyl; triclopyr, tridiphane; trietazine; trifluralin; triflusulfuron und Ester (z.B. Methylester, DPX-66037); trimeturon; tsitodef; vemolate; WL 110547, d.h. 5-Phenoxy-1-[3-(trifluormethyl)-phenyl]-1H-tetrazol; UBH-509; D-489; LS 82-556; KPP-300; KPP-421, MT-146, NC-324; KH-218; DPX-N8189; DOWCO-535; DK-8910; V-53482; PP-600; MBH-001.

Zur Anwendung werden die in handelsüblicher Form vorliegenden Formulierungen gegebenenfalls in üblicher Weise verdünnt z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

Mit den äußeren Bedingungen wie Temperatur, Feuchtigkeit, der Art des verwendeten Herbizids, u.a. variiert die erforderliche Aufwandmenge der Herbizide der Formel (I). Sie kann innerhalb weiter Grenzen variiert werden, z.B. zwischen 0,001 und 10,0 kg/ha oder mehr Aktivsubstanz, vorzugsweise liegt sie jedoch zwischen 0,005 und 5 kg/ha.

Folgende Beispiele dienen zur Erläuterung der Erfindung:

### A. Formulierungsbeispiele

a) Ein Staubmittel wird erhalten, indem man 10 Gew.-Teile einer Verbindung der Formel (II) - (VII) und/oder aus der Gruppe (b) oder eines Wirkstoffgemischs aus einem herbiziden Wirkstoff der Formel (I) und einem Safener der Formel (II) - (VII) und/oder aus der Gruppe (b) und 90 Gew.-Teile Talkum als Inertstoff mischt und in einer Schlagmühle zerkleinert.
b) Ein in Wasser leicht dispergierbares, benetzbares Pulver wird erhalten, indem man 25 Gewichtsteile einer Verbindung der Formel (II), (III), (IV)) und/oder der Gruppe b) oder eines Wirkstoffgemischs aus einem herbiziden Wirkstoff der Formel (I) und einem Safener der Formel (II), (III), (IV) und/oder aus der Gruppe b), 64 Gewichtsteile kaolinhaltigen Quarz als Inertstoff, 10 Gewichtsteile ligninsulfonsaures Kalium und 1 Gew.-Teil oleoylmethyltaurinsaures Natrium als Netz- und Dispergiermittel mischt und in einer Stiftmühle mahlt.
c) Ein in Wasser leicht dispergierbares Dispersionskonzentrat wird erhalten, indem man 20 Gewichtsteile einer Verbindung der Formel (II) - (VII) und/oder aus der Gruppe b) oder eines Wirkstoffgemischs aus einem herbiziden Wirkstoff der Formel (I) und einem Safener der Formel (II) - (VII) und/oder aus der Gruppe b), 6 Gew.-Teilen Alkylphenolpolyglykolether (®Triton X 207), 3 Gew.-Teilen Isotridecanolpolyglykolether (8 EO) und 71 Gew.- Teilen paraffinischem Mineralöl (Siedebereich z.B. ca. 255 bis über 277 C) mischt und in einer Reibkugelmühle auf eine Feinheit von unter 5 Mikron vermahlt.
d) Ein emulgierbares Konzentrat wird erhalten aus 15 Gew.-Teilen einer Verbindung der Formel (II) - (VII) und/oder aus der Gruppe b) oder eines Wirkstoffgemischs aus einem herbiziden Wirkstoff der Formel (I) und einem Safener der Formel (II) - (VII) und/oder aus der Gruppe b), 75 Gew.Teilen Cyclohexanon als Lösemittel und 10 Gew.-Teilen oxethyliertes Nonylphenol als Emulgator.
e) Ein in Wasser dispergierbares Granulat wird erhalten, indem man

| | |
|---|---|
| 75 Gew.-Teile | einer Verbindung der Formel (II) - (VII) und/oder aus der Gruppe (b) oder eines Wirkstoffgemischs aus einem herbiziden Wirkstoff der Formel (I) und einem Safener der Formel (II) - (VII) und/oder aus der Gruppe b) |
| 10 " | ligninsulfonsaures Calcium, |
| 5 " | Natriumlaurylsulfat, |
| 3 " | Polyvinylalkohol und |
| 7 " | Kaolin |

mischt, auf einer Stiftmühle mahlt und das Pulver in einem Wirbelbett durch Aufsprühen von Wasser als Granulierflüssigkeit granuliert.
f) Ein in Wasser dispergierbares Granulat wird auch erhalten, indem man

| | |
|---|---|
| 25 Gew.-Teil(e) | einer Verbindung der Formel (II) - (VII) und/oder aus der Gruppen b) oder eines Wirkstoffgemischs aus einem herbiziden Wirkstoff der Formel (I) und einem Safener der Formel (II) - (VII) und/oder aus der Gruppe b) |
| 5 " | 2,2'-dinaphthylmethan-6,6'-disulfonsaures Natrium, |
| 2 " | oleoylmethyltaurinsaures Natrium, |
| 1 " | Polyvinylalkohol, |
| 17 " | Calciumcarbonat und |
| 50 " | Wasser |

auf einer Kolloidmühle homogensiert und vorzerkleinert, anschließend auf einer Perlmühle mahlt und die so erhaltene Suspension in einem Sprühturm mittels einer Einstoffdüse zerstäubt und trocknet.

### Biologische Beispiele

### 1. Bonitierung der Schadwirkung

Die Schadwirkung an den Pflanzen wird nach einer Skala von 0-100 % optisch im Vergleich zu Kontrollpflanzen bewertet:
- 0% =: keine erkennbare Wirkung im Vergleich zur unbehandelten Pflanze,
- 100% =: behandelte Pflanze stirbt ab.

### 2. Herbizidwirkung und Safenerwirkung im Vorauflauf

Samen von mono- und dikotylen Unkrautpflanzen sowie von Kulturpflanzen werden in Plastiktöpfen von 9 cm Durchmesser in sandiger Lehmerde ausgelegt und mit Erde abgedeckt. Alternativ werden für den Test unter Bedingungen für Paddy-Reis im Reisanbau vorkommende Unkräuter im mit Wasser gesättigten Boden kultiviert, wobei so viel Wasser in die Töpfe gefüllt wird, daß das Wasser bis zur Bodenoberfläche oder einige Millimeter darüber steht. Die in Form von Emulsionskonzentraten formulierten erfindungsgemäßen Herbizid-Safener-Wirkstoffkombinationen sowie in parallelen Versuchen die entsprechend formulierten Einzelwirkstoffe werden dann als Emulsionen mit einer Wasseraufwandmenge von umgerechnet 300 l/ha, in unterschiedlichen Dosierungen auf die Oberfläche der Abdeckerde appliziert oder beim Reis ins Bewässerungswasser gegossen.

Nach der Behandlung werden die Töpfe im Gewächshaus aufgestellt und unter guten Wachstumsbedingungen gehalten. Die optische Bonitur der Pflanzen- bzw. der Auflaufschäden erfolgt nach dem Auflaufen der Versuchspflanzen nach einer Versuchszeit von 3-4 Wochen im Vergleich zu unbehandelten Kontrollen. Wie die Versuche zeigen, weisen die erfindungsgemäßen herbiziden Mittel eine gute herbizide Vorauflaufwirkung gegen ein breites Spektrum von Ungräsem und Unkräutern auf, wobei Schäden an Kulturpflanzen wie Mais, Reis, Weizen oder Gerste oder anderem Getreide im Vergleich zur Anwendung der einzelnen Herbizide ohne Safener wesentlich reduziert sind, d.h. um 50% bis zu 100% weniger Herbizidschäden aufweisen.

### 3. Herbizidwirkung und Safenerwirkung im Nachauflauf

Samen von mono- und dikotylen Unkrautpflanzen und von Kulturpflanzen werden in Plastiktöpfen in sandiger Lehmerde ausgelegt, mit Erde abgedeckt und im Gewächshaus unter guten Wachstumsbedingungen angezogen. Alternativ werden für den Test unter Bedingungen für Paddy-Reis im Reisanbau vorkommende Unkräuter und Reis in Töpfen angezogen, in denen Wasser bis zu 2 cm über der Bodenoberfläche steht, und während der Wachstumsphase kultiviert. Ca. drei Wochen nach der Aussaat werden die Versuchspflanzen im Dreiblattstadium behandelt. Die als Emulsionskonzentrate formulierten erfindungsgemäßen Herbizid-Safener-Wirkstoffkombinationen sowie in parallelen Versuchen die entsprechend formulierten Einzelwirkstoffe werden in verschiedenen Dosierungen mit einer Wasseraufwandmenge von umgerechnet 300 I/ha auf die grünen Pflanzenteile gesprüht und nach 3 Wochen Standzeit der Versuchspflanzen im Gewächshaus unter optimalen Wachstumsbedingungen die Wirkung der Präparate optisch im Vergleich zu unbehandelten Kontrollen bonitiert. Bei Reis oder bei Unkräutem, die im Reisanbau vorkommen, werden die Wirkstoffe auch direkt ins Bewässerungswasser gegeben (Applikation in Analogie zur sogenannten Granulatanwendung) oder auf Pflanzen und ins Bewässerungswasser gesprüht. Im Fall von Freilandversuchen wurden Samen von mono- und dikotylen Unkrautpflanzen und von Kulturpflanzen in sandiger Lehmerde ausgelegt, mit Erde abgedeckt und angezogen. Die weitere Behandlung erfolgte wie zuvor beschrieben. Die Auswertung erfolgte hierbei zwei Wochen nach der Behandlung mit Herbizid beziehungsweise Safener. Bei den Versuchen mit Zuckerrohr erfolgte die Auswertung nach 63 Tagen. Die Versuche zeigen, daß die erfindungsgemäßen herbiziden Mittel eine gute herbizide Nachauflaufwirkung gegen ein breites Spektrum von Ungräsem und Unkräutern aufweisen, wobei Schäden an Kulturpflanzen wie Zuckerrohr, Mais, Reis, Weizen oder Gerste oder anderem Getreide im Vergleich zur Anwendung der einzelnen Herbizide ohne Safener wesentlich reduziert sind, d.h. um 50% bis zu 100% weniger Herbizidschäden aufweisen.

In Tabelle 1 sind die eingesetzten Herbizide und in Tabelle 2 der Safener genannt. In den Tabellen 3 bis 7 ist angegeben, um wieviel Prozent die durch die Anwendung eines Herbizids verursachte Schädigung in Mais, Zuckerrohr, Reis, Weizen bzw. Gerste durch gleichzeitige Anwendung des Safeners gemindert wird.

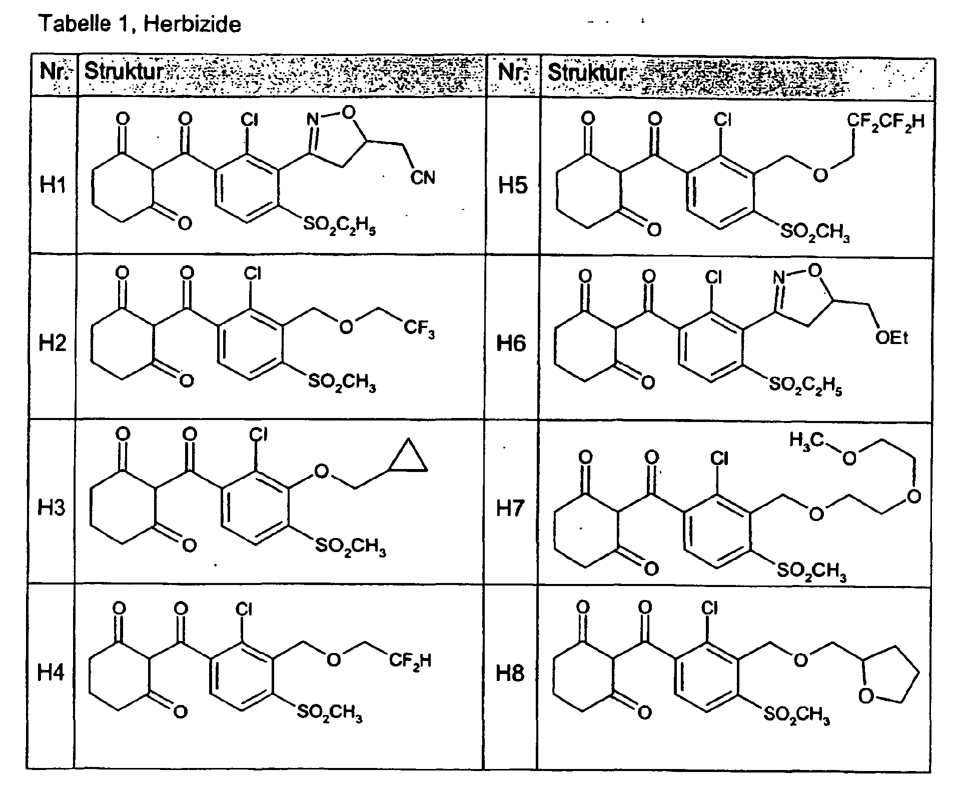

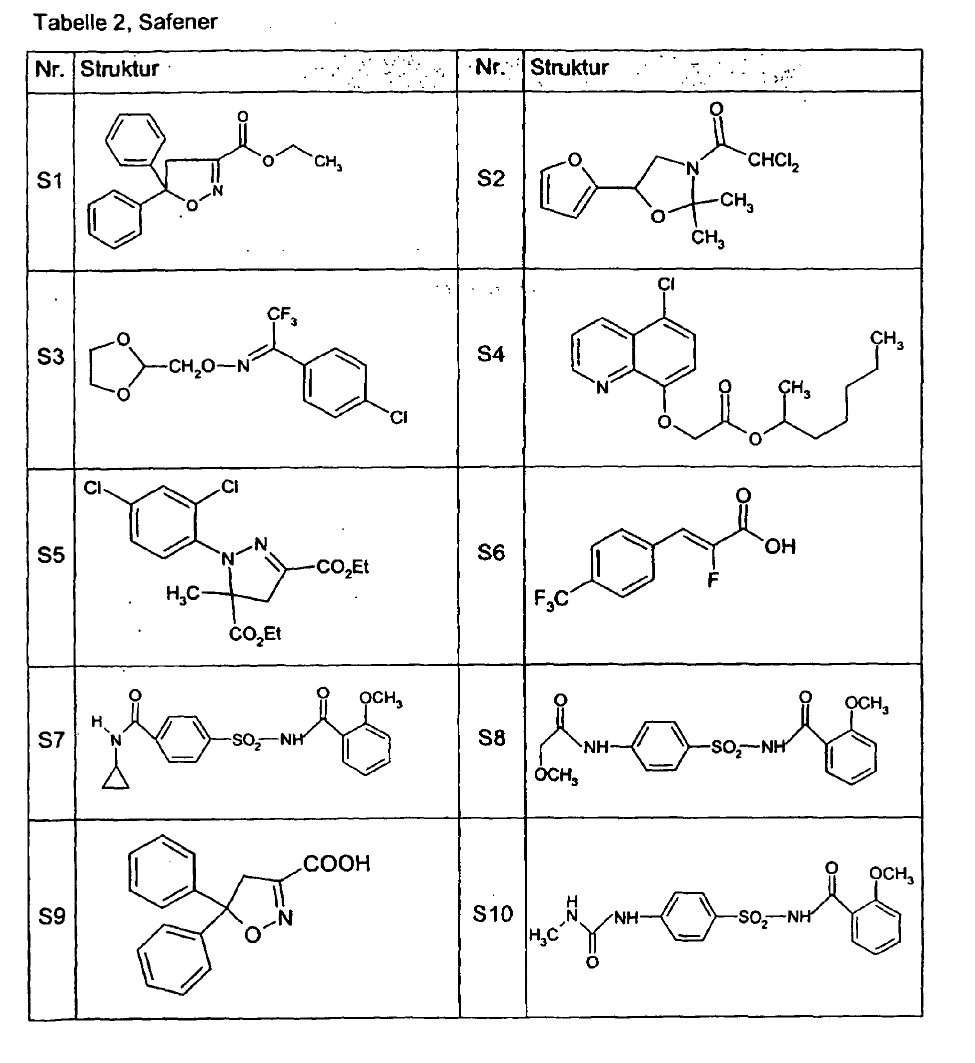

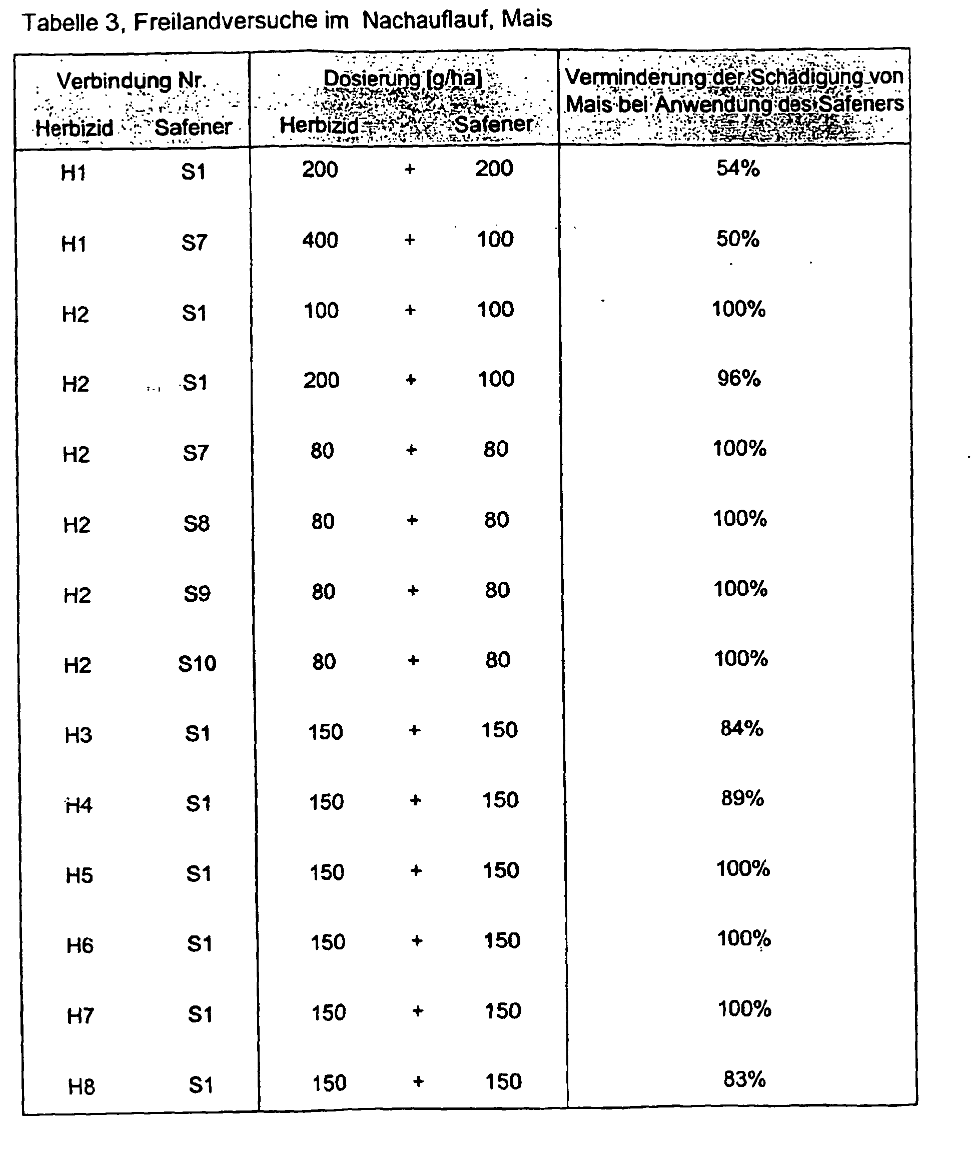

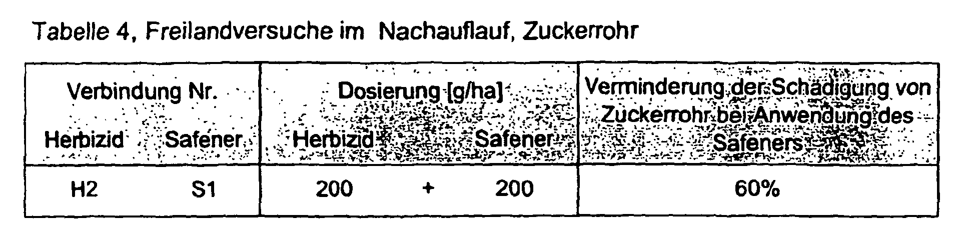

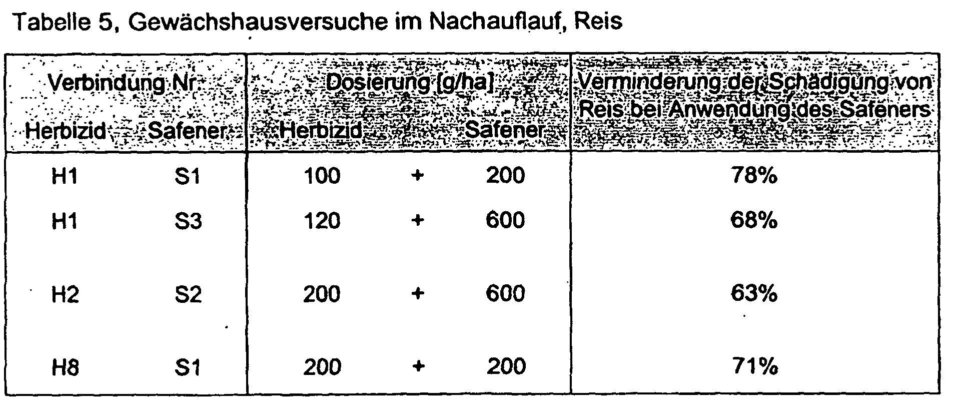

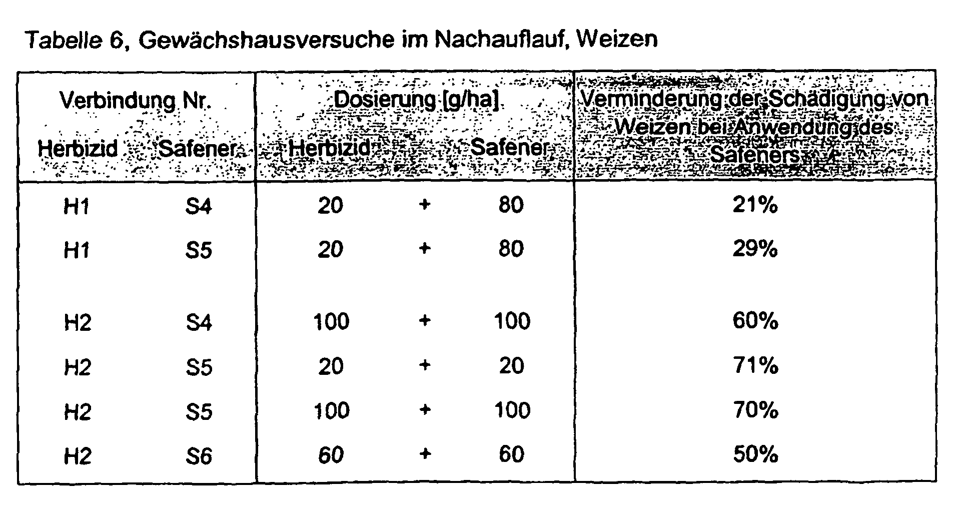

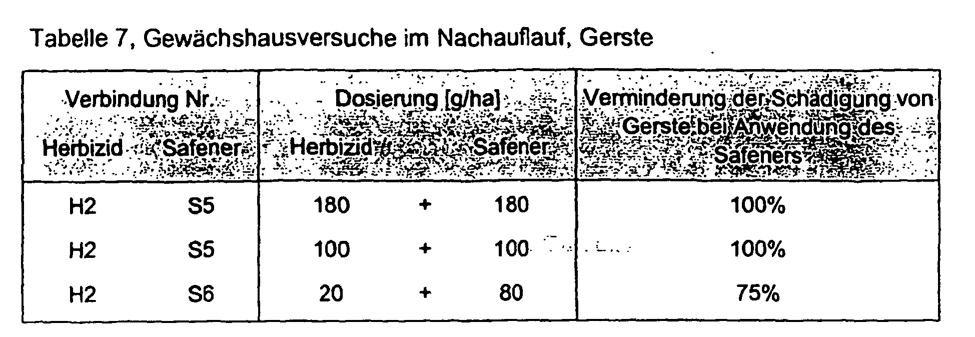

In den Ausführungsbeispielen nachfolgende Tabelle 8 wurde das Saatgut zunächst mit Safener behandelt und nach Aussaat und Auflaufen der Pflanze dann mit Herbizid behandelt. Auch hier zeigt sich im Vergleich zu dem nicht mit Safener behandelten Saatgut eine deutliche Verminderung der durch das Herbizid verursachten Schäden. Die angegebene Menge des Safeners bezieht sich auf die Menge des Saatguts.

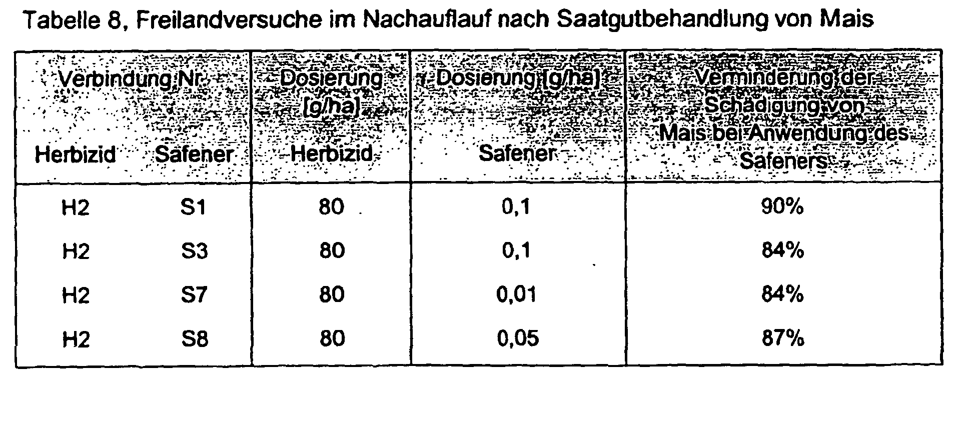

## Patentansprüche

1. Herbizides Mittel, enthaltend
A) eine herbizid wirksame Menge an einer oder mehreren Verbindungen der Formel (I) 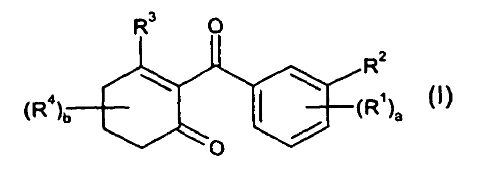 worin die Symbole und Indizes folgende Bedeutungen haben:
R¹ ist Nitro, Amino, Halogen, Cyano, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₂-C₄)-Haloalkinyl, (C₁-C₄)-Haloalkoxy, (C₁-C₄)-Haloalkylthio, (C₁-C₄)-Alkoxycarbonyl, (C₁-C₄)-Alkylsulfonyl, (C₁-C₄)-Alkylsulfinyl, (C₁-C₄)-Alkylthio, (C₁-C₄)-Alkoxy, (C₁-C₄)-Alkoxy-(C₁-C₄)-alkoxy, (C₁-C₄)-Alkylcarbonyl, (C₁-C₄)-Alkylaminosulfonyl, (C₁-C₄)-Dialkylaminosulfonyl, (C₁-C₄)-Alkylcarbamoyl, (C₁-C₄)-Dialkylcarbamoyl, (C₁-C₄)-Alkoxy-(C₁-C₄)-alkyl, (C₁-C₄)-Alkylamino oder (C₁-C₄)-Dialkylamino;
R² ist (C₁-C₄)-Haloalkoxy-(C₁-C₄)-alkyl, (C₁-C₄)-alkoxy-(C₁-C₄)-alkoxy-(C₁-C₄)-alkoxy-(C₁-C₄)-alkyl, (C₃-C₆)-Cycloalkoxy-(C₁-C₄)-alkyl, (C₃-C₆)-cycloalkyl-(C₁₋C₄)-alkoxy, Tetrahydrofuran-2-yl-methoxy-(C₁-C₄)-alkyl, Tetrahydrofuran-3-yl-methoxy-(C₁-C₄)-alkyl oder durch einen Rest aus der Gruppe Cyanomethyl, Ethoxymethyl und Methoxymethyl substituierten heterocyclischen Rest der Gruppe lsoxazol-3-yl und 4,5-Dihydro-isoxazol-3-yl;
R³ ist OR⁵, Cyano, Halogen, Cyanato, Thiocyanato, (C₁-C₄)-Alkylthio, (C₁-C₄)-Alkylsulfinyl, (C₁-C₄)-Alkylsulfonyl, (C₂-C₄)-Alkenylthio, (C₂-C₄)-Alkenylsulfinyl, (C₂-C₄)-Alkenylsulfonyl, (C₂-C₄)-Alkinylthio, (C₂-C₄)-Alkinylsulfinyl, (C₂-C₄)-Alkinylsulfonyl, (C₁-C₄)-Haloalkylthio, (C₂-C₄)-Haloalkenylthio, (C₂-C₄)-Haloalkinylthio, (C₁-C₄)-Haloalkylsulfinyl, (C₂-C₄)-Haloalkenylsulfinyl, (C₂-C₄)- Haloalkinylsulfinyl, (C₁-C₄)-Haloalkylsulfonyl, (C₂-C₄)-Haloalkenylsulfonyl oder (C₂-C₄)-Haloalkinylsulfonyl;
R⁴ ist (C₁-C₄)-Alkyl;
R⁵ ist Wasserstoff, (C₁-C₄)-Alkyl, (C₁-C₄)-Haloalkyl oder (C₁-C₄)-Alkoxy-(C₁-C₄)-alkyl;
a ist 0, 1, 2 oder 3;
b ist 0, 1 oder 2;
und
B) einer antidotisch wirksamen Menge an einer oder mehreren Verbindungen aus den Gruppen a) bis e):
a) Verbindungen der Formeln (II) bis (IV), 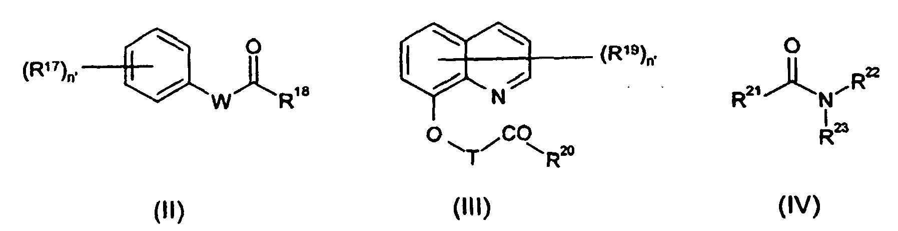
worin die Symbole und Indizes folgende Bedeutungen haben:
n' ist eine natürliche Zahl von 1 bis 5, vorzugsweise 1 bis 3;
T ist eine (C₁- oder C₂-)-Alkandiylkette, die unsubstituiert oder mit einem oder zwei (C₁-C₄)-Alkylresten oder mit [(C₁-C₃)-Alkoxy]-carbonyl substituiert ist;
W ist ein Rest aus der Gruppe (W1) bis (W4), 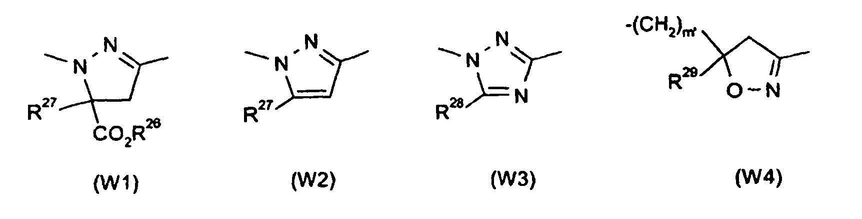
m' ist 0 oder 1;
R¹⁷, R¹⁹ sind gleich oder verschieden Wasserstoff, Halogen, (C₁-C₄)-Alkyl, (C₁-C₄)-Alkoxy, Nitro oder (C₁-C₄)-Haloalkyl;
R¹⁸, R²⁰ sind gleich oder verschieden OR²⁴, SR²⁴ oder NR²⁴R²⁵ oder ein gesättigter oder ungesättigter 3- bis 7-gliedriger Heterocyclus mit mindestens einem N-Atom und bis zu 3 Heteroatomen, der über das N-Atom mit der Carbonylgruppe in (II) bzw. (III) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR²⁴, NHR²⁵ oder N(CH₃)₂, insbesondere der Formel OR²⁴;
R²⁴ ist Wasserstoff oder ein unsubstituierter oder substituierter aliphatischer Kohlenwasserstoffrest, vorzugsweise mit insgesamt 1 bis 18 C-Atomen;
R²⁵ ist Wasserstoff, (C₁-C₆)-Alkyl, (C₁-C₆)-Alkoxy oder substituiertes oder unsubstituiertes Phenyl;
R²⁶ ist Wasserstoff, (C₁-C₈)-Alkyl, (C₁-C₈)-Haloalkyl, (C₁-C₄)-Alkoxy-(C₁-C₄)-alkyl, (C₁-C₆)-Hydroxyalkyl, (C₃-C₁)-Cycloalkyl oder Tri-(C₁-C₄)-alkyl-silyl;
R²⁷, R²⁸, R²⁹ sind gleich oder verschieden Wasserstoff, (C₁-C₈)-Alkyl, (C₁₋C₆)-Haloalkyl, (C₃-C₁₂)-Cycloalkyl oder substituiertes oder unsubstituiertes Phenyl;
R²¹ ist (C₁-C₄)-Alkyl, (C₁-C₄)-Haloalkyl, (C₂-C₄)-Alkenyl, (C₂-C₄)-Haloalkenyl, (C₃-C₇)-Cycloalkyl, vorzugsweise Dichlormethyl;
R²², R²³ sind gleich oder verschieden Wasserstoff, (C₁-C₄)-Alkyl, (C₂-C₄)-Alkenyl, (C₂-C₄)-Alkinyl, (C₁-C₄)-Haloalkyl, (C₂-C₄)-Haloalkenyl, (C₁-C₄)-Alkylcarbamoyl-(C₁-C₄)-alkyl, (C₂-C₄)-Alkenylcarbamoyl-(C₁-C₄)-alkyl, (C₁-C₄)-Alkoxy-(C₁-C₄)-alkyl, Dioxolanyl-(C₁-C₄)-alkyl, Thiazolyl, Furyl, Furylalkyl, Thienyl, Piperidyl, substituiertes oder unsubstituiertes Phenyl, oder R²² und R²³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring;
b) eine oder mehreren Verbindungen aus Gruppe:
1,8-Naphthalsäureanhydrid,
Methyl-diphenylmethoxyacetat,
Cyanomethoxyimino(phenyl)acetonitril (Cyometrinil),
1,3-Dioxolan-2-ylmethoxyimino(phenyl)acetonitril (Oxabetrinil),
4'-Chlor-2,2,2-trifluoracetophenon O-1,3-dioxolan-2-ylmethyloxim (Fluxofenim),
4,6-Dichlor-2-phenylpyrimidin (Fenclorim),
Benzyl-2-chlor-4-trifluormethyl-1,3-thiazol-5-carboxylat (Flurazole),
2-Dichlormethyl-2-methyl-1,3-dioxolan (MG-191),
N-(4-Methylphenyl)-N'-(1-methyl-1-phenylethyl)harnstoff (Dymron),
1-[4-(N-2-Methoxybenzoylsulfamoyl)phenyl]-3-methylharnstoff,
1-[4-(N-2-Methoxybenzoylsulfamoyl)phenyl]-3,3-dirnethylharnstoff,
1-[4-(N-4,5-Dimethylbenzoylsulfamoyl)phenyl]-3-methylharnstoff,
1-[4-(N-Naphthoylsulfamoyl)phenyl]-3,3-dimethylharnstoff,
(2,4-Dichlorphenoxy)essigsäure (2,4-D),
(4-Chlorphenoxy)essigsäure,
(R,S)-2-(4-Chlor-o-tolyloxy)propionsäure (Mecoprop),
4-(2,4-Dichlorphenoxy)buttersäure (2,4-DB),
(4-Chlor-o-tolyloxy)essigsäure (MCPA),
4-(4-Chlor-o-tolyloxy)buttersäure,
4-(4-Chlorphenoxy)buttersäure,
3,6-Dichlor-2-methoxybenzoesäure (Dicamba),
1-(Ethoxycarbonyl)ethyl 3,6-dichlor-2-methoxybenzoat (Lactidichlor) sowie deren Salze und Ester, vorzugsweise (C₁-C₈);
c) N-Acylsulfonamide der Formel (V) und ihre Salze, 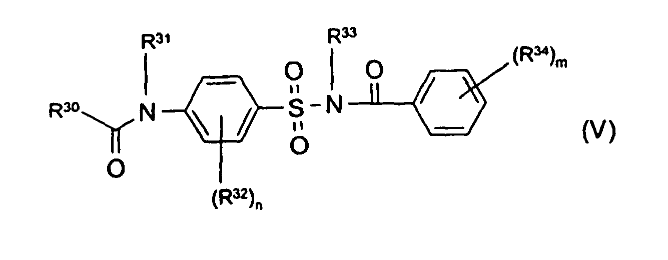
worin
R³⁰ Wasserstoff, einen kohlenstoffhaltigen Rest wie einen Kohlenwasserstoffrest, einen Kohlenwasserstoffoxyrest, einen Kohlenwasserstoffthiorest oder einen Heterocyclylrest, wobei jeder der letztgenannten 4 Reste unsubstituiert oder durch einen oder mehrere gleiche oder verschiedene Reste aus der Gruppe Halogen, Cyano, Nitro, Amino, Hydroxy, Carboxy, Formyl, Carbonamid, Sulfonamid und Reste der Formel -Z^{a}-R^{a} substituiert ist,
wobei jeder Kohlenwasserstoffteil vorzugsweise 1 bis 20 C-Atome aufweist und ein C-haltiger Rest R³⁰ inklusive Substituenten vorzugsweise 1 bis 30 C-Atome aufweist;
R³¹ Wasserstoff oder (C₁-C₄)-Alkyl, vorzugsweise Wasserstoff, oder
R³⁰ und R³¹ zusammen mit der Gruppe der Formel -CO-N- den Rest eines 3- bis 8-gliedrigen gesättigten oder ungesättigten Rings;
R³² gleich oder verschieden Halogen, Cyano, Nitro, Amino, Hydroxy, Carboxy, Formyl, CONH₂, SO₂NH₂ oder einen Rest der Formel -Z^{b}-R^{b} ;
R³³ Wasserstoff oder (C₁-C₄)-Alkyl, vorzugsweise H;
R³⁴ gleich oder verschieden Halogen, Cyano, Nitro, Amino, Hydroxy, Carboxy, CHO, CONH₂, SO₂NH₂ oder einen Rest der Formel -Z^{c}-R^{c} ;
R^{a} einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Mono- und Di-[(C₁-C₄)-alkyl]-amino substituiert ist, oder einen Alkylrest, in dem mehrere, vorzugsweise 2 oder 3, nicht benachbarte CH₂-Gruppen jeweils durch ein Sauerstoffatom ersetzt sind;
R^{b},R^{c} gleich oder verschieden einen Kohlenwasserstoffrest oder einen Heterocyclylrest, wobei jeder der beiden letztgenannten Reste unsubstituiert oder durch einen oder mehrere gleiche oder verschiedene Reste aus der Gruppe Halogen, Cyano, Nitro, Amino, Hydroxy, Phosphoryl, Halogen-(C₁₋C₄)-alkoxy, Mono- und Di-[(C₁-C₄)-alkyl]-amino substituiert ist, oder einen Alkylrest, in dem mehrere, vorzugsweise 2 oder 3, nicht benachbarte CH₂₋Gruppen jeweils durch ein Sauerstoffatom ersetzt sind;
Z^{a} eine divalente Gruppe der Formel -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- oderNR*-SO₂-, wobei die rechts angegebene Bindung der jeweiligen divalenten Gruppe die Bindung zum Rest R^{a} ist und wobei die R* in den letztgenannten 5 Resten unabhängig voneinander jeweils H, (C₁-C₄)-Alkyl oder Halo-(C₁-C₄)-alkyl bedeuten;
Z^{b},Z^{c} unabhängig voneinander eine direkte Bindung oder eine divalente Gruppe der Formel -O-, -S-, -CO-, -CS-, -CO-O-, -CO-S-, -O-CO-,
-S-CO-, -SO-, -SO₂-, -NR*-, -SO₂-NR*-, -NR*-SO₂-, -CO-NR*-
oder -NR*-CO-, wobei die rechts angegebene Bindung der jeweiligen divalenten Gruppe die Bindung zum Rest R^{b} bzw. R^{c} ist und wobei die R* in den letztgenannten 5 Resten unabhängig voneinander jeweils H, (C₁-C₄)-Alkyl oder Halo-(C₁-C₄)-alkyl bedeuten;
n eine ganze Zahl von 0 bis 4, vorzugsweise 0, 1 oder 2, insbesondere 0 oder 1, und
m eine ganze Zahl von 0 bis 5, vorzugsweise 0, 1, 2 oder 3, insbesondere 0, 1 oder 2;
bedeuten;
d) Acylsulfamoylbenzoesäureamide der allgemeinen Formel (VI), gegebenenfalls auch in Salzform, 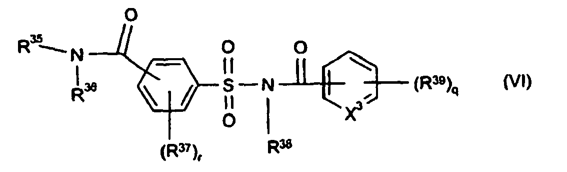
worin
X³ CH oder N;
R³⁵ Wasserstoff, Heterocyclyl oder einen Kohlenwasserstoffrest, wobei die beiden letztgenannten Reste gegebenenfalls durch einen oder mehrere, gleiche oder verschiedene Reste aus der Gruppe Halogen, Cyano, Nitro, Amino, Hydroxy, Carboxy, CHO, CONH₂, SO₂NH₂ und Z^{a}-R^{a} substituiert sind;
R³⁶ Wasserstoff, Hydroxy, (C₁-C₆)-Alkyl, (C₂-C₆)-Alkenyl, (C₂-C₆)-Alkinyl, (C₁-C₆)-Alkoxy, (C₂-C₆)-Alkenyloxy, wobei die fünf letztgenannten Reste gegebenenfalls durch einen oder mehrere, gleiche oder verschiedene Reste aus der Gruppe Halogen, Hydroxy, (C₁-C₄)-Alkyl, (C₁-C₄)-Alkoxy und (C₁-C₄)-Alkylthio substituiert sind, oder
R³⁵ und R³⁶ zusammen mit dem sie tragenden Stickstoffatom einen 3- bis 8-gliedrigen gesättigten oder ungesättigten Ring;
R³⁷ Halogen, Cyano, Nitro, Amino, Hydroxy, Carboxy, CHO, CONH₂, SO₂NH₂ oder Z^{b}-R^{b};
R³⁸ Wasserstoff, (C₁-C₄)-Alkyl, (C₂-C₄)-Alkenyl oder (C₂-C₄)-Alkinyl;
R³⁹ Halogen, Cyano, Nitro, Amino, Hydroxy, Carboxy, Phosphoryl, CHO, CONH₂, SO₂NH₂ oder Z^{c}-R^{c-};
R^{a} einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Mono- und Di-[(C₁-C₄)-alkyl]-amino substituiert sind;
R^{b}, R^{c} gleich oder verschieden einen (C₂-C₂₀)-Alkylrest, dessen Kohlenstoffkette ein- oder mehrfach durch Sauerstoffatome unterbrochen ist, Heterocyclyl oder einen Kohlenwasserstoffrest, wobei die zwei letztgenannten Reste gegebenenfalls durch einen oder mehrere, gleiche oder verschiedene Reste aus der Gruppe Halogen, Cyano, Nitro, Amino, Hydroxy, Phosphoryl, (C₁-C₄)-Haloalkoxy, Mono- und Di-[(C₁-C₄)-alkyl]-amino substituiert sind;
Z^{a} eine divalente Einheit aus der Gruppe O, S, CO, CS, C(O)O, C(O)S, SO, SO₂, NR^{d}, C(O)NR° oder SO₂NR^{d};
Z^{b}, Z^{c} gleich oder verschieden eine direkte Bindung oder eine divalente Einheit aus der Gruppe O, S, CO, CS, C(O)O, C(O)S, SO, SO₂, NR^{d}, SO₂NR^{d} oder C(O)NR^{d}
R^{d} Wasserstoff, (C₁-C₄)-Alkyl oder (C₁-C₄)-Haloalkyl;
r eine ganze Zahl von 0 bis 4, und
q für den Fall, daß X³ für CH steht, eine ganze Zahl von 0 bis 5, und für den Fall, daß X für N steht, eine ganze Zahl von 0 bis 4 bedeuten;
e) Verbindungen der Formel (VII), 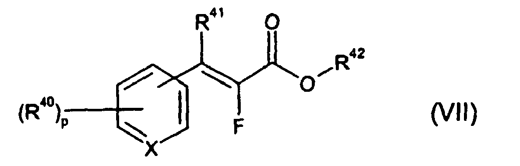
worin die Symbole und Indizes folgende Bedeutungen haben:
in welcher
X CH oder N bedeutet,
p für den Fall, daß X = N ist, eine ganze Zahl von 0 bis 2 und für den Fall, daß X = CH ist, eine ganze Zahl von 0 bis 3 bedeutet;
R⁴⁰ Halogen, (C₁-C₄)-Alkyl, (C₁-C₄)-Haloalkyl, (C₁-C₄)-Alkoxy, (C₁-C₄)-Haloalkoxy, Nitro, (C₁-C₄)-Alkylthio, (C₁-C₄)-Alkytsulfonyl, (C₁-C₄)-Alkoxycarbonyl, Phenyl oder Phenoxy bedeutet, wobei die beiden letztgenannten Reste unsubstituiert oder durch einen oder mehrere, vorzugsweise bis zu drei gleiche oder verschiedene Reste aus der Gruppe, bestehend aus Halogen, (C₁-C₄)-Alkyl, (C₁-C₄)-Haloalkyl, (C₁-C₄)-Alkoxy, Halogen-(C₁-C₄)-alkoxy, Nitro, Cyano substituiert sind;
R⁴¹ Wasserstoff oder (C₁-C₄)-Alkyl bedeutet und
R⁴² Wasserstoff, (C₁-C₈)-Alkyl, (C₃-C₆)-Cycloalkyl, (C₂-C₆)-Alkenyl, (C₂-C₆)-Alkinyl oder Aryl bedeutet, wobei jeder der vorgenannten C-haltigen Reste unsubstituiert oder durch einen oder mehrere, vorzugsweise bis zu drei gleiche oder verschiedene Reste aus der Gruppe, bestehend aus Halogen, Nitro, Cyano, Hydroxy, (C₁-C₈)-Alkoxy, worin eine oder mehrere, vorzugsweise bis zu drei CH₂-Gruppen durch Sauerstoff ersetzt sein können, (C₁-C₄)-Alkylthio, (C₁-C₄)-Alkylsulfonyl, (C₃-C₆)-Cycloalkyl, (C₂-C₄)-Alkenyloxy, (C₂-C₄)-Alkinyloxy substituiert ist,
einschließlich der Stereoisomeren und der in der Landwirtschaft gebräuchlichen Salze.

2. Herbizides Mittel nach Anspruch 1, enthaltend Safener der Formel (II) und/oder (III), bei denen die Symbole und Indizes folgende Bedeutungen haben:
R²⁴ ist Wasserstoff, (C₁-C₁₈)-Alkyl, (C₃-C₁₂)-Cycloalkyl, (C₂-C₈)-Alkenyl und (C₂₋C₁₈)Alkinyl, wobei die C-haltigen Gruppen durch einen oder mehrere, vorzugsweise bis zu drei, Reste R⁵⁰ substituiert sein können;
R⁵⁰ ist gleich oder verschieden Halogen, Hydroxy, (C₁-C₈)-Alkoxy, (C₁-C₈)-Alkylthio, (C₂-C₈)-Alkenylthio, (C₂-C₈)-Alkinylthio, (C₂-C₈)-Alkenyloxy, (C₂-C₈)-Alkinyloxy, (C₃-C₇)-Cycloalkyl, (C₃-C₇)-Cycloalkoxy, Cyano, Mono- und Di-(C₁₋C₄)-alkylamino, Carboxy, (C₁-C₈)-Alkoxycarbonyl, (C₂-C₈)-Alkenyloxycarbonyl, (C₁-C₈)-Alkylthiocarbonyl, (C₂-C₈)-Alkinyloxycarbonyl, (C₁-C₈)-Alkylcarbonyl, (C₂-C₈)-Alkenylcarbonyl, (C₂-C₈)-Alkinylcarbonyl, 1-(Hydroxyimino)-(C₁-C₆)-alkyl, 1-[(C₁-C₄)-Alkylimino]-(C₁-C₄)-alkyl, 1-[(C₁-C₄)-Alkoxyimino]-(C₁-C₆) alkyl, (C₁-C₈)-Alkylcarbonylamino, (C₂-C₈)-Alkenylcarbonylamino, (C₂-C₈)-Alkinylcarbonylamino, Aminocarbonyl, (C₁-C₈)-Alkylaminocarbonyl, Di-(C₁-C₆)-alkylaminocarbonyl, (C₂-C₆)Alkenylaminocarbonyl, (C₂-C₆)-Alkinylaminocarbonyl, (C₁-C₈)-Alkoxycarbonylamino, (C₁-C₈)-Alkylaminocarbonylamino, (C₁-C₆)-Alkylcarbonyloxy, das unsubstituiert oder durch R⁵¹ substituiert ist, (C₂-C₆)-Alkenylcarbonyloxy, (C₂-C₆)-Alkinylcarbonyloxy, (C₁-C₈)-Alkylsulfonyl, Phenyl, Phenyl-(C₁-C₆)-alkoxy, Phenyl-(C₁-C₆)-alkoxycarbonyl, Phenoxy, Phenoxy-(C₁-C₆)-alkoxy, Phenoxy-(C₁-C₆)-alkoxycarbonyl, Phenylcarbonyloxy, Phenylcarbonylamino, Phenyl-(C₁-C₆)-alkylcarbonylamino, wobei die letztgenannten 9 Reste im Phenylring unsubstituiert oder ein- oder mehrfach, vorzugsweise bis zu dreifach durch Reste R⁵² substituiert sind; SiR'₃, -O-SiR'_{3,} R'₃Si-(C₁-C₈)-alkoxy, -CO-O-NR'₂, -O-N=CR'₂, -N=CR'₂, -O-NR'₂, -NR'₂, CH(OR')₂, -O-(CH₂)ₘ-CH(OR')₂, -CR"'(OR')₂ , -O-(CH₂)ₘCR"'(OR")₂ oder durch R"O-CHR"'CHCOR"-(C₁-C₆)-alkoxy,
R⁵¹ ist gleich oder verschieden Halogen, Nitro, (C₁-C₄)-Alkoxy und unsubstituiertes oder mit einem oder mehreren, vorzugsweise bis zu drei Resten R⁵¹ substituiertes Phenyl;
R⁵² ist gleich oder verschieden Halogen, (C₁-C₄)-Alkyl, (C₁-C₄)-Alkoxy, (C₁-C₄)-Haloalkyl, (C₁-C₄)-Haloalkoxy oder Nitro;
R' ist gleich oder verschieden Wasserstoff, (C₁-C₄)-Alkyl, unsubstituiertes oder durch einen oder mehrere, vorzugsweise bis zu drei, Reste R⁵² substituiertes Phenyl oder zwei Reste R' bilden zusammen eine (C₂-C₆)-Alkandiylkette;
R" ist gleich oder verschieden (C₁-C₄)-Alkyl oder zwei Reste R" bilden zusammen eine (C₂-C₆)-Alkandiylkette;
R'" ist Wasserstoff oder (C₁-C₄)-Alkyl;
m ist 0, 1, 2, 3, 4, 5 oder 6.

3. Herbizides Mittel nach Anspruch 1 oder 2, enthaltend Safener der Formel (II) und/oder (III), bei denen die Symbole und Indizes folgende Bedeutungen haben:
R²⁴ ist Wasserstoff, (C₁-C₈)-Alkyl oder (C₃-C₇)-Cycloalkyl, wobei die vorstehenden C-haltigen Reste unsubstituiert sind oder ein- oder mehrfach durch Halogen oder ein- oder zweifach, vorzugsweise einfach, durch Reste R⁵⁰ substituiert sind;
R⁵⁰ ist gleich oder verschieden Hydroxy, (C₁-C₄)-Alkoxy, Carboxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl und 1-[(C₁-C₄)-Alkoxyimino]-(C₁-C₄)-alkyl; -SiR'₃, -O-N=CR'₂, -N=CR'₂, -NR'₂, undO-NR'₂, worin R' gleich oder verschieden Wasserstoff, (C₁-C₄)-Alkyl oder paarweise eine (C₄-C₅)-Alkandiylkette bedeutet;
R²⁷ R²⁸, R²⁹ sind gleich oder verschieden Wasserstoff, (C₁-C₈)-Alkyl, (C₁-C₆)-Haloalkyl, (C₃-C₇)-Cycloalkyl oder Phenyl, das unsubstituiert oder durch einen oder mehrere Reste aus der Gruppe Halogen, Cyano, Nitro, Amino, Mono- und Di-[(C₁-C₄)alkyl]-amino, (C₁-C₄)-Alkyl, (C₁-C₄)-Haloalkyl, (C₁-C₄)-Alkoxy. (C₁-C₄)-Haloalkoxy, (C₁-C₄)-Alkylthio und (C₁-C₄)-Alkylsulfonyl substituiert ist;
R¹⁷, R¹⁹ sind gleich oder verschieden Wasserstoff, Halogen, Methyl, Ethyl, Methoxy, Ethoxy, (C₁ oder C₂)-Haloalkyl, vorzugsweise Wasserstoff, Halogen oder (C₁ oder C₂)-Haloalkyl.

4. Herbizides Mittel nach einem der Ansprüche 1 bis 3, enthaltend Safener der Formel (II), wobei die Symbole und Indizes folgende Bedeutungen haben:
R¹⁷ ist Halogen, Nitro oder (C₁-C₄)-Haloalkyl;
n' ist 1, 2 oder 3;
R¹⁸ ist ein Rest der Formel OR²⁴;
R²⁴ ist Wasserstoff, (C₁-C₈)-Alkyl oder (C₃-C₇)-Cycloalkyl, wobei die vorstehenden C-haltigen Reste unsubstituiert sind oder ein- oder mehrfach, vorzugsweise bis zu dreifach, durch gleiche oder verschiedene Halogen-Reste oder bis zu zweifach, vorzugsweise einfach, durch gleiche oder verschiedene Reste aus der Gruppe Hydroxy, (C₁-C₄)-Alkoxy, (C₁-C₄)-Alkoxycarbonyl, (C₂-C₆)-Alkenyloxycarbonyl, (C₂-C₆)-Alkinyloxycarbonyl, 1-(Hydroxyimino)-(C₁-C₄)-alkyl, 1-[(C₁-C₄)-Alkylimino]-(C₁-C₄)-alkyl, 1-[(C₁-C₄)-Alkoxyimino]-(C₁-C₄)-alkyl und Reste der Formeln -SiR'₃, -O-N=R'₂, -N=CR'₂, -NR'₂ und -O-NR'₂ substituiert sind, wobei die Reste R' in den genannten Formeln gleich oder verschieden Wasserstoff, (C₁-C₄)-Alkyl oder paarweise (C₄ oder C₅)-Alkandiyl bedeuten;
R²⁷, R²⁸, R²⁹ sind gleich oder verschieden Wasserstoff, (C₁-C₈)-Alkyl, (C₁-C₆)-Haloalkyl, (C₃-C₇)-Cycloalkyl oder Phenyl, das unsubstituiert oder durch einen oder mehrere der Reste aus der Gruppe Halogen, (C₁-C₄)-Alkyl, (C₁-C₄)-Alkoxy, Nitro, (C₁-C₄)-Haloalkyl und (C₁-C₄)-Haloalkoxy substituiert ist.

5. Herbizides Mittel nach Anspruch 1, enthaltend Verbindung der Formel (I), wobei die Symbole und Indices folgende Bedeutung haben:
R¹ ist Nitro, Cyano, Chlor, Fluor, Methyl, Trifluormethyl, Methylsulfonyl, Ethylsulfonyl;
R² ist Pentafluorethoxymethyl, 2,2-Difluorethoxymethyl, 2,2,2-Trifluorethoxymethyl, 2,2,3,3-Tetrafluorpropoxymethyl, Cyclopentyloxymethyl, Cyclohexyloxy-methyl, Cyclopropyloxy, Tetrahydrofuran-2-yl-methoxymethyl, Methoxyethoxyethoxymethyl, oder durch einen Rest aus der Gruppe Cyanomethyl, Ethoxymethyl und Methoxymethyl substituiertes 4,5-Dihydroisoxazol-3-yl;
R³ ist OR⁵;
_{R}⁵ ist Wasserstoff;
a ist 2;
b ist 0, und wobei sich die zwei Reste R¹ in 2- und 4- Position des Phenylrings befinden.

6. Herbizides Mittel nach einem der Ansprüche 1 bis 5, **dadurch gekennzeichnet, daß** das Gewichtsverhältnis Herbizid zu Safener 1:10 bis 10:1 beträgt.

7. Herbizides Mittel nach einem der Ansprüche 1 bis 6, **dadurch gekennzeichnet, daß** es ein weiteres Herbizid enthält.

8. Verfahren zur Bekämpfung von Schadpflanzen in Kulturen, **dadurch gekennzeichnet, daß** man eine herbizid wirksame Menge eines herbiziden Mittels gemäß einem oder mehreren der Ansprüche 1 bis 7 auf die Schadpflanzen, Pflanzen, Pflanzensamen oder die Fläche, auf der die Pflanzen wachsen, aufbringt.

9. Verfahren gemäß Anspruch 8, **dadurch gekennzeichnet, daß** die Pflanzen aus der Gruppe Zuckerrohr, Mais, Weizen, Roggen, Gerste, Hafer, Reis, Sorghum, Baumwolle und Soja stammen.

10. Verfahren gemäß Anspruch 8 oder 9, **dadurch gekennzeichnet, daß** die Pflanzen gentechnisch verändert sind.

## Claims

1. A herbicidal composition comprising
A) a herbicidally effective amount of one or more compounds of the formula (I) 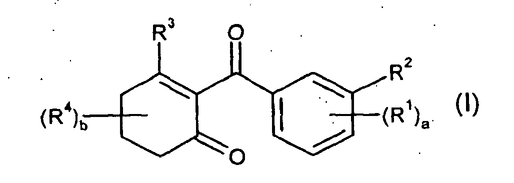 in which the symbols and indices have the following definitions:
R¹ is nitro, amino, halogen, cyano, (C₁-C₄)-alkyl, (C₂-C₄)-alkenyl, (C₂-C₄)-alkynyl, (C₁-C₄)-haloalkyl, (C₂-C₄)-haloalkenyl,- (C₂-C₄)-haloalkynyl, (C₁-C₄)-haloalkoxy, (C₁-C₄)-haloalkylthio, (C₁-C₄)-alkoxycarbonyl, (C₁-C₄)-alkylsuffonyl, (C₁-C₄)-alkylsulfnyl, (C₁-C₄)-alkylthio, (C₁-C₄)-alkoxy, (C₁-C₄)-alkoxy-(C₁-C₄)-alkoxy, (C₁-C₄)-alkylcarbonyl, (C₁-C₄)-alkylaminosulfonyl, (C₁-C₄)-dialkylaminosulfonyl, (C₁-C₄)-alkylcarbamoyl, (C₁-C₄)-dialkylcarbamoyl, (C₁-C₄)-alkoxy-(C₁-C₄)-alkyl, (C₁-C₄)-alkylamino or (C₁-C₄)-dialkylamino;
R² is (C₁-C₄)-haloalkoxy-(C₁-C₄)-alkyl, (C₁-C₄)-alkoxy-(C₁-C₄)-alkoxy-(C₁-C₄)-alkoxy-(C₁-C₄)-alkyl, (C₃-C₆)-cycloalkoxy-(C₁-C₄)-alkyl, (C₃-C₆)-cycloalkyl-(C₁₋C₄)-alkoxy, tetrahydrofuran-2-yl-methoxy-(C₁-C₄)-alkyl, tetrahydrofuran-3-yl-methoxy-(C₁-C₄)-alkyl or a heterocyclic radical from the group consisting of isoxazol-3-yl and 4,5-dihydroisoxazol-3-yl which is substituted by a radical from the group consisting of cyanomethyl, ethoxymethyl and methoxymethyl;
R³ is OR⁵, cyano, halogen, cyanato, thiocyanato, (C₁-C₄)-alkylthio, (C₁-C₄)-alkylsulfinyl, (C₁-C₄)-alkylsultonyl, (C₂-C₄)-alkenylthio, (C₂-C₄)-alkenylsulfinyl, (C₂-C₄)-alkenylsulfonyl, (C₂-C₄)-alkynylthio, (C₂-C₄)-alkynylsulfinyl, (C₂-C₄)-alkynylsulfonyl, (C₁-C₄)-haloalkylthio, (C₂-C₄)-haloalkenylthio, (C₂-C₄)-haloalkynylthio, (C₁-C₄)-haloalkylsulfinyl, (C₂-C₄)-haloalkenylsulfinyl, (C₂-C₄)-haloalkynylsulfinyl, (C₁-C₄)-haloalkylsulfonyl, (C₂-C₄)-haloalkenylsulfonyl or (C₂₋C₄)-haloalkynylsulfonyl;
R⁴ is (C₁-C₄)-alkyl;
R⁵ is hydrogen, (C₁-C₄)-alkyl, (C₁-C₄)-haloalkyl or (C₁-C₄)-alkoxy-(C₁-C₄)-alkyl;
a is 0, 1, 2 or 3;
b is 0, 1 or 2;
and
B) an antidote-active amount of one or more compounds from groups a) to e):
a) compounds of the formulae (II) to (IV), 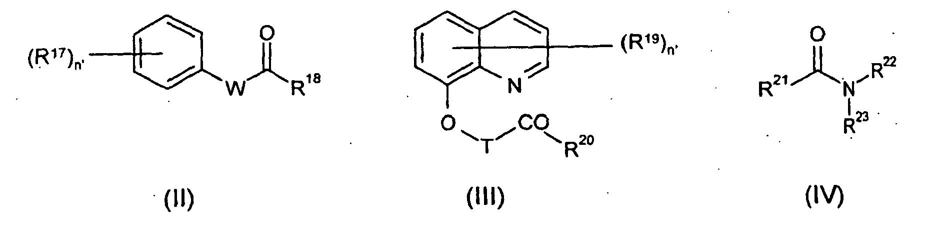
in which the symbols and indices have the following definitions:
n' is a natural number from 1 to 5, preferably from 1 to 3;
T is a (C₁- or C₂-)-alkanediyl chain which is unsubstituted or substituted by one or two (C₁-C₄)-alkyl radicals or by [(C₁-C₃)-alkoxy]carbonyl;
W is a radical from the group (W1) to (W4), 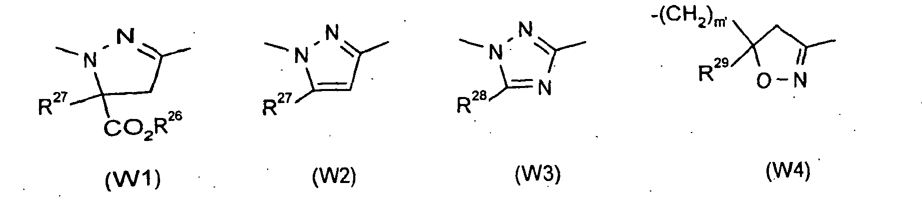
m' is 0 or 1;
R¹⁷ , R¹⁹ are identical or different and are hydrogen, halogen, (C₁-C₄)-alkyl, (C₁-C₄)-alkoxy, nitro or (C₁-C₄)-haloalkyl;
R¹⁸, R²⁰ are identical or different and are OR²⁴**,** SR²⁴ or NR²⁴ R²⁵ or a saturated or unsaturated 3- to 7-membered heterocycle containing at least one nitrogen atom and up to 3 heteroatoms which is bonded by the nitrogen atom to the carbonyl group in (II) or (III) and is urisubstituted or substituted by radicals from the group consisting of (C₁-C₄)-alkyl, (C₁₋C₄)-alkoxy and unsubstituted or substituted phenyl, preferably a radical of the formula OR²⁴, NHR²⁵ or N(CH₃)₂, in particular of the formula OR²⁴;
R²⁴ is hydrogen or an unsubstituted or substituted aliphatic hydrocarbon radical, preferably having a total of from 1 to 18 carbon atoms;
R²⁵ is hydrogen, (C₁-C₆)-alkyl, (C₁-C₆)-alkoxy or substituted or unsubstituted phenyl;
R²⁶ is hydrogen, (C₁-C₈)-alkyl, (C₁-C₈)-haloalkyl, (C₁-C₄)-alkoxy-(C₁-C₄)-alkyl, (C₁-C₆)-hydroxyalkyl, (C₃-C₇)-cycloalkyl or tri-(C₁-C₄)-alkylsilyl;
R²⁷, R²⁸, R²⁹ are identical or different and are hydrogen, (C₁-C₈)-alkyl, (C₁-C₆)-haloalkyl, (C₃-C₁₂)-cycloalkyl or substituted or unsubstituted phenyl;
R²¹ is (C₁-C₄)-alkyl, (C₁-C₄)-haloalkyl, (C₂-C₄)-alkenyl, (C₂-C₄)-haloalkenyl, (C₃-C₇)-cycloalkyl, preferably dichloromethyl;
R²², R²³ are identical or different and are hydrogen, (C₁-C₄)-alkyl, (C₂-C₄)-alkenyl, (C₂-C₄)-alkynyl, (C₁-C₄)-haloalkyl, (C₂-C₄)-haloalkenyl, (C₁-C₄)-alkylcarbamoyl-(C₁-C₄)-alkyl, (C₂-C₄)-alkenylcarbamoyl-(C₁-C₄)-alkyl, (C₁-C₄)-alkoxy-(C₁-C₄)-alkyl, dioxolanyl-(C₁-C₄)-alkyl, thiazolyl, furyl, furylalkyl, thienyl, piperidyl, substituted or unsubstituted phenyl, or R²² and R²³ together form a substituted or unsubstituted heterocyclic ring, preferably an oxazolidine, thiazolidine, piperidine, morpholine, hexahydropyrimidine or benzoxazine ring;
b) one or more compounds from the following group:
1,8-naphthalic anhydride,
methyl diphenylmethoxyacetate,
cyanomethoxyimino(phenyl)acetonitrile (cyometrinile),
1,3-dioxolan-2-ylmethoxyimino(phenyl)acetonitrile (oxabetrinil),
4'-chloro-2,2,2-trifluoroacetophenone O-1,3-dioxolan-2-ylmethyl oxime (fluxofenim),
4,6-dichloro-2-phenylpyrimidine (fenclorim),
benzyl 2-chloro-4-trifluoromethyl-1,3-thiazole-5-carboxylate (flurazole),
2-dichloromethyl-2-methyl-1,3-dioxolane (MG-191),
N-(4-methylphenyl)-N'-(1-methyl-1-phenylethyl)urea (dymron),
1-[4-(N-2-methoxybenzoylsulfamoyl)phenyl]-3-methylurea,
1-[4-(N-2-methoxybenzoylsulfamoyl)phenyl]-3,3-dimethylurea,
1-[4-(N-4,5-dimethylbenzoylsulfamoyl)phenyl]-3-methylurea,
1-[4-(N-naphthoylsulfamoyl)phenyl]-3,3-dimethylurea,
(2,4-dichlorophenoxy)acetic acid (2,4-D),
(4-chlorophenoxy)acetic acid,
(R,S)-2-(4-chloro-o-tolyloxy)propionic acid (mecoprop),
4-(2,4-dichlorophenoxy)butyric acid (2,4-DB),
(4-chloro-o-tolyloxy)acetic acid (MCPA),
4-(4-chloro-o-tolyloxy)butyric acid,
4-(4-chlorophenoxy)butyric acid,
3,6-dichloro-2-methoxybenzoic acid (dicamba),
1-(ethoxycarbonyl)ethyl 3,6-dichloro-2-methoxybenzoate (lactidichlor)
and their salts and esters, preferably (C₁-C₈);
c) N-acylsulfonamides of the formula (V) and their salts, 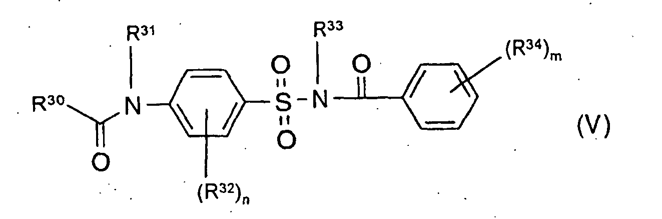
in which
R³⁰ is hydrogen, a carbon-containing radical such as a hydrocarbon radical, a hydrocarbon-oxy radical, a hydrocarbon-thio radical or a heterocyclyl radical, each of the 4 last-mentioned radicals being unsubstituted or being substituted by one or more identical or different radicals selected from the group consisting of halogen, cyano, nitro, amino, hydroxyl, carboxyl, formyl, carboxamide, sulfonamide and radicals of the formula -Z^{a}-R^{a}, each hydrocarbon moiety preferably having 1 to 20 carbon atoms and a carbon-containing radical R³⁰ inclusive of substituents preferably having 1 to 30 carbon atoms;
R³¹ is hydrogen or (C₁-C₄)-alkyl, preferably hydrogen, or
R³⁰ and R³¹ together with the group of the formula -CO-N- are the residue of a 3- to 8-membered saturated or unsaturated ring;
R³² is identical or different and is halogen, cyano, nitro; amino, hydroxyl, carboxyl, formyl, CONH₂, SO₂NH₂ or a radical of the formula -Z^{b}-R^{b};
R³³ is hydrogen or (C₁-C₄)-alkyl, preferably H;
R³⁴ is identical or different and is halogen, cyano, nitro, amino, hydroxyl, carboxyl, CHO, CONH₂, SO₂NH₂ or a radical of the formula -Z^{c}-R^{c};
R^{a} is a hydrocarbon radical or a heterocyclyl radical, each of the two last-mentioned radicals being unsubstituted or substituted by one or more identical or different radicals selected from the group consisting of halogen, cyano, nitro, amino, hydroxyl, mono- and di-[(C₁-C₄)-alkyl]amino, or an alkyl radical in which a plurality, preferably 2 or 3, non-adjacent CH₂ groups are in each case replaced by one oxygen atom;
R^{b}, R^{c} are identical or different and are a hydrocarbon radical or a heterocyclyl radical, each of the two last-mentioned radicals being unsubstituted or substituted by one or more identical or different radicals selected from the group consisting of halogen, cyano, nitro, amino, hydroxyl, phosphoryl, halo-(C₁-C₄)-alkoxy, mono- and di-[(C₁-C₄)-alkyl]amino, or an alkyl radical in which a plurality, preferably 2 or 3, non-adjacent CH₂ groups are replaced in each case by one oxygen atom;
Z^{a} is a divalent group of the formula -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- or -NR*-SO₂-, the bond given on the right-hand side of each of the divalent groups being the bond to the radical R^{a}, and the radicals R* in the 5 last-mentioned radicals independently of each other being in each case H, (C₁₋C₄)-alkyl or halo-(C₁-C₄)-alkyl;
Z^{b}, Z^{c} independently of one another are a direct bond or a divalent group of the formula -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*- or -NR*-CO-, the bond given on the right-hand side of each of the divalent groups being the bond to the radical R^{b} or R^{c} and the radicals R* in the 5 last-mentioned radicals independently of one another being in each case H, (C₁-C₄)-alkyl or halo-(C₁-C₄)-alkyl;
n is an integer from 0 to 4, preferably 0, 1 or 2, in particular 0 or 1, and
m is an integer from 0 to 5, preferably 0, 1, 2 or 3, in particular 0, 1 or 2;
d) acylsulfamoylbenzamides of the formula (VI), optionally also in salt form, 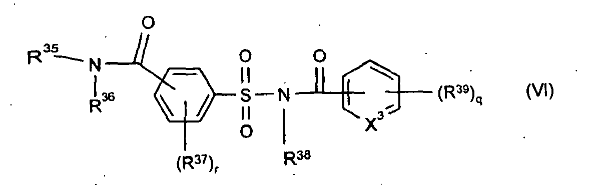
in which
X³ is CH or N;
R ³⁵ is hydrogen, heterocyclyl or a hydrocarbon radical, the two last-mentioned radicals optionally being substituted by one or more identical or different radicals selected from the group consisting of halogen, cyano, nitro, amino, hydroxyl, carboxyl, CHO, CONH₂, SO₂NH₂ and Z^{a}-R^{a} ;
R³⁶ is hydrogen, hydroxyl, (C₁-C₆)-alkyl, (C₂-C₆₎-alkenyl, (C₂-C₆₎-alkynyl, (C₁₋C₆)-alkoxy, (C₂-C₆)-alkenyloxy, the five last-mentioned radicals optionally being substituted by one or more identical or different radicals selected from the group consisting of halogen, hydroxyl, (C₁-C₄)-alkyl, (C₁-C₄)-alkoxy and (C₁-C₄)-alkylthio, or
R³⁵ and R³⁶ together with the nitrogen atom to which they are attached are a 3- to 8-membered saturated or unsaturated ring;
R³⁷ is halogen, cyano, nitro, amino, hydroxyl, carboxyl, CHO, CONH₂, SO₂NH₂ or Z^{b}-R^{b};
R³⁸ is hydrogen, (C₁-C₄)-alkyl, (C₂-C₄)-alkenyl or (C₂-C₄)-alkynyl;
R³⁹ is halogen, cyano, nitro, amino, hydroxyl, carboxyl, phosphoryl, CHO, CONH₂, SO₂NH₂ or Z^{c}-R^{c};
R^{a} is a (C₂-C₂₀)-alkyl radical whose carbon chain is interrupted once or more than once by oxygen atoms, or is heterocyclyl or a hydrocarbon radical, the two last-mentioned radicals optionally being substituted by one or more identical or different radicals selected from the group consisting of halogen, cyano, nitro, amino, hydroxyl, mono- and di-[(C₁-C₄)-alkyl]amino;
R^{b}, R^{c} are identical or different and are a (C₂-C₂₀)-alkyl radical whose carbon chain is interrupted once or more than once by oxygen atoms, or a heterocyclyl or a hydrocarbon radical, the two last-mentioned radicals optionally being substituted by one or more identical or different radicals selected from the group consisting of halogen, cyano, nitro, amino, hydroxyl, phosphoryl, (C₁₋C₄)-haloalkoxy, mono- and di-[(C₁-C₄)-alkyl]amino;
Z^{a} is a divalent unit selected from the group consisting of O, S, CO, CS, C(O)O, C(O)S, SO, SO₂, NR^{d}, C(O)NR^{d} or SO₂NR^{d};
Z^{b}, Z^{c} are identical or different and are a direct bond or a divalent unit selected from the group consisting of O, S, CO, CS, C(O)O, C(O)S, SO, SO₂, NR^{d}, SO₂NR^{d} or C(O)NR^{d};
R^{d} is hydrogen, (C₁-C₄)-alkyl or (C₁-C₄)-haloalkyl;
r is an integer from 0 to 4, and
q in the event that X³ is CH, is an integer from 0 to 5 and, in the event that X is N, is an integer from 0 to 4;
e) compounds of the formula (VII), 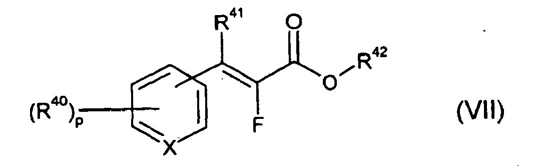
in which the symbols and indices have the following definitions:
X is CH or N,
p in the event that X = N, is an integer from 0 to 2 and, in the event that X = CH, is an integer from 0 to 3;
R⁴⁰ is halogen, (C₁-C₄)-alkyl, (C₁-C₄)-haloalkyl, (C₁-C₄)-alkoxy, (C₁-C₄)-haloalkoxy, nitro, (C₁-C₄)-alkylthio, (C₁-C₄)-alkylsulfonyl, (C₁-C₄)-alkoxycarbonyl, phenyl or phenoxy, the two last-mentioned radicals being unsubstituted or substituted by one or more, preferably up to three, identical or different radicals from the group consisting of halogen, (C₁-C₄)-alkyl, (C₁-C₄)-haloalkyl, (C₁-C₄)-alkoxy, halo-(C₁-C₄)-alkoxy, nitro and cyano;
R⁴¹ is hydrogen or (C₁-C₄)-alkyl, and
R⁴² is hydrogen, (C₁-C₈)-alkyl, (C₃-C₆)-cycloalkyl, (C₂-C₆)-alkenyl, (C₂-C₆)-alkynyl or aryl, each of the aforementioned carbon-containing radicals being unsubstituted or substituted by one or more, preferably up to three, identical or different radicals from the group consisting of halogen, nitro, cyano, hydroxyl, (C₁-C₈)-alkoxy, in which one or more, preferably up to three, CH₂ groups may be replaced by oxygen, (C₁-C₄)-alkylthio, (C₁-C₄)-alkylsulfonyl, (C₃-C₆)-cycloalkyl, (C₂-C₄)-alkenyloxy and (C₂-C₄)-alkynyloxy,
inclusive of the stereoisomers and the agriculturally customary salts.

2. The herbicidal composition as claimed in claim 1, comprising safeners of the formula (II) and/or (III) wherein the symbols and indices have the following definitions:
R²⁴ is hydrogen, (C₁-C₁₈)-alkyl, (C₃-C₁₂)-cycloalkyl, (C₂-C₈)-alkenyl and (C₂-C₁₈)-alkynyl, where the carbon-containing groups can be substituted by one or more, preferably up to three, radicals R⁵⁰;
R⁵⁰ is identical or different and is halogen, hydroxyl, (C₁-C₈)-alkoxy, (C₁-C₈)-alkylthio, (C₂-C₈)-alkenylthio, (C₂-C₈)-alkynylthio, (C₂-C₈)-alkenyloxy, (C₂-C₈)-alkynyloxy, (C₃-C₇)-cycloalkyl, (C₃-C₇)-cycloalkoxy, cyano, mono- and di-(C₁₋C4)-alkylamino, carboxyl, (C₁-C₈)-alkoxycarbonyl, (C₂-C₈)-alkenyloxycarbonyl, (C₁-C₈)-alkylthiocarbonyl, (C₂-C₈)-alkynyloxycarbonyl, (C₁-C₈)-alkylcarbonyl, (C₂-C₈)-alkenylcarbonyl, (C₂-C₈)-alkynylcarbonyl, 1-(hydroxyimino)-(C₁-C₆)-alkyl, 1-[(C₁-C₄)-alkylimino]-(C₁-C₄)-alkyl, 1-[(C₁-C₄)-alkoxyimino]-(C₁-C₆)-alkyl, (C₁-C₈)-alkylcarbonylamino, (C₂-C₈)-alkenylcarbonylamino, (C₂-C₈)-alkynylcarbonylamino, aminocarbonyl, (C₁-C₈)-alkylaminocarbonyl, di-(C₁-C₆)-alkylaminocarbonyl, (C₂-C₆)-alkenylaminocarbonyl, (C₂-C₆)-alkynylaminocarbonyl, (C₁-C₈)-alkoxycarbonylamino, (C₁-C₈)-alkylaminocarbonylamino, (C₁-C₆)-alkylcarbonyloxy which is unsubstituted or substituted by R⁵¹, or is (C₂-C₆)-alkenylcarbonyloxy, (C₂-C₆)-alkynylcarbonyloxy, (C₁-C₈)-alkylsulfonyl, phenyl, phenyl-(C₁-C₆)-alkoxy, phenyl-(C₁-C₆)- alkoxycarbonyl, phenoxy, phenoxy-(C₁-C₆)-alkoxy, phenoxy-(C₁-C₆)-alkoxycarbonyl, phenylcarbonyloxy, phenylcarbonylamino, phenyl-(C₁-C₆)-alkylcarbonylamino, the last-mentioned 9 radicals for the phenyl ring being unsubstituted or mono- or polysubstituted, preferably up to trisubstituted, by radicals R⁵²; SiR'₃, OSiR'₃, R'₃Si-(C₁-C₈)-alkoxy, -CO-O-NR'₂, -O-N=CR'₂, -N=CR'₂, -O-NR'₂, -NR'₂, -CH(OR')₂, -O-(CH₂)ₘ-CH(OR')₂, -CR"'(OR')₂, -O-(CH₂)ₘCR"'(OR")₂ or by R"O-CHR'''CHCOR"-(C₁-C₆)-alkoxy,
R⁵¹ is identical or different and is halogen, nitro, (C₁-C₄)-alkoxy and phenyl which is unsubstituted or substituted by one or more, preferably up to three, radicals R⁵¹;
R⁵² is identical or different and is halogen, (C₁-C₄)-alkyl, (C₁-C₄)-alkoxy, (C₁-C₄)-haloalkyl, (C₁-C₄)-haloalkoxy or nitro;
R' is identical or different and is hydrogen, (C₁-C₄)-alkyl, phenyl which is unsubstituted or substituted by one or more, preferably up to three, radicals R⁵², or two radicals R' together form a (C₂-C₆)-alkanediyl chain;
R" is identical or different and is (C₁-C₄)-alkyl, or two radicals R" together form a (C₂-C₆)-alkanediyl chain;
R"' is hydrogen or (C₁-C₄)-alkyl;
m is 0, 1, 2, 3, 4, 5 or 6.

3. The herbicidal composition as claimed in claim 1 or 2, comprising safeners of the formula (II) and/or (III) wherein the symbols and indices have the following definitions:
R²⁴ is hydrogen, (C₁-C₈)-alkyl or (C₃-C₇)-cycloalkyl, the above carbon-containing radicals being unsubstituted or mono- or polysubstituted by halogen or mono- or disubstituted, by preference monosubstituted, by radicals R⁵⁰,
R⁵⁰ is identical or different and is hydroxyl, (C₁-C₄)-alkoxy, carboxyl, (C₁-C₄)-alkoxycarbonyl, (C₂-C₆)-alkenyloxycarbonyl, (C₂-C₆)-alkynyloxycarbonyl, 1 - (hydroxyimino)-(C₁-C₄)-alkyl, 1-[(C₁-C₄)-alkylimino]-(C₁-C₄)-alkyl and 1-[(C₁₋C₄)-alkoxyimino]-(C₁-C₄)-alkyl; -SiR'₃, -O-N=CR'₂, -N=CR'₂, -NR'₂ and -ONR'₂ where R' is identical or different and is hydrogen, (C₁-C₄)-alkyl or, as a pair, a (C₄-C₅)-alkanediyl chain,
R²⁷, R²⁸ R²⁹ are identical or different and are hydrogen, (C₁-C₈)-alkyl, (C₁-C₆)-haloalkyl, (C₃-C₇)-cycloalkyl or phenyl which is unsubstituted or substituted by one or more radicals selected from the group consisting of halogen, cyano, nitro, amino, mono- and di-[(C₁-C₄)-alkyl]amino, (C₁-C₄)-alkyl, (C₁-C₄)-haloalkyl, (C₁-C₄)-alkoxy, (C₁-C₄)-haloalkoxy, (C₁-C₄)-alkylthio and (C₁-C₄)-alkylsulfonyl;
R¹⁷, R¹⁹ are identical or different and are hydrogen, halogen, methyl, ethyl, methoxy; ethoxy, (C₁ or C₂)-haloalkyl, by preference hydrogen, halogen or (C₁ or C₂)-haloalkyl.

4. The herbicidal composition as claimed in any one of claims 1 to 3, comprising safeners of the formula (II) wherein the symbols and indices have the following definitions:
R¹⁷ is halogen, nitro or (C₁-C₄)-haloalkyl;
n' is 1, 2 or 3;
R¹⁸ is a radical of the formula OR²⁴;
R²⁴ is hydrogen, (C₁-C₈)-alkyl or (C₃-C₇)-cycloalkyl, where the above carbon-containing radicals are unsubstituted or mono- or polysubstituted, by preference up to trisubstituted, by identical or different halogen radicals or up to disubstituted, by preference monosubstituted, by identical or different radicals selected from the group consisting of hydroxyl, (C₁-C₄)-alkoxy, (C₁₋C₄)-alkoxycarbonyl, (C₂-C₆)-alkenyloxycarbonyl, (C₂-C₆)-alkynyloxycarbonyl, 1-(hydroxyimino)-(C₁-C₄)-alkyl, 1-[(C₁-C₄)-alkylimino]-(C₁-C₄)-alkyl, 1-[(C₁₋C₄)-alkoxyimino]-(C₁-C₄)-alkyl and radicals of the formulae -SiR'₃, -O-N=R'₂, -N=CR'₂, -NR'₂ and -O-NR'₂, where the radicals R' in the abovementioned formulae are identical or different and are hydrogen, (C₁-C₄)-alkyl or, as a pair, are (C₄ or C₅)-alkanediyl;
R²⁷, R²⁸, R²⁹ are identical or different and are hydrogen, (C₁-C₈)-alkyl, (C₁-C₆)-haloalkyl, (C₃-C₇)-cycloalkyl or phenyl which is unsubstituted or substituted by one or more of the radicals selected from the group consisting of halogen, (C₁-C₄)-alkyl, (C₁-C₄)-alkoxy, nitro, (C₁-C₄)-haloalkyl and (C₁-C₄)-haloalkoxy.

5. The herbicidal composition as claimed in claim 1, comprising compounds of the formula (I) wherein the symbols and indices have the following definitions:
R¹ is nitro, cyano, chlorine, fluorine, methyl, trifluoromethyl, methylsulfonyl or ethylsulfonyl;
R² is pentafluoroethoxymethyl, 2,2-difluoroethoxymethyl, 2,2,2-trifluoroethoxymethyl, 2,2,3,3-tetrafluoropropoxymethyl, cyclopentyloxymethyl, cyclohexyloxymethyl, cyclopropyloxy, tetrahydrofuran-2-ylmethoxymethyl, methoxyethoxyethoxymethyl, or 4,5-dihydroisoxazol-3-yl which is substituted by a radical from the group consisting of cyanomethyl, ethoxymethyl and methoxymethyl;
R³ is OR⁵;
R⁵ is hydrogen;
a is 2;
b is 0, and the two radicals R¹ are in positions 2 and 4 of the phenyl ring.

6. The herbicidal composition as claimed in any one of claims 1 to 5, wherein the ratio of herbicide to safener is from 1:10 to 10:1.

7. The herbicidal composition as claimed in any one of claims 1 to 6, comprising a further herbicide.

8. A method of controlling weed plants in crops which comprises applying a herbicidally active amount of a herbicidal composition as claimed in one or more of claims 1 to 7 to the weed plants, plants, seeds of plants, or the area on which the plants are growing.

9. The method as claimed in claim 8, wherein the plants are from the group consisting of sugar cane, corn, wheat, rye, barley, oats, rice, sorghum, cotton, and soya.

10. The method as claimed in claim 8 or 9, wherein the plants have been genetically modified.

## Revendications

1. Agent herbicide renfermant
A) une quantité à efficacité herbicide d'un ou plusieurs composés de formule (I) 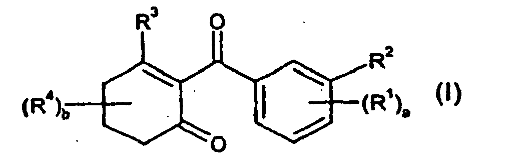
dans laquelle les symboles et les indices possèdent les significations suivantes :
R¹ représente un groupe nitro, amino, halogène, cyano, alkyle en C₁-C₄, alcényle en C₂-C₄, alcynyle en C₂-C₄, haloalkyle en C₁-C₄, haloalcényle en C₂-C₄, haloalcynyle en C₂-C₄, haloalkoxy en C₁-C₄, halo (alkyl en C₁-C₄)thio, alkoxycarbonyle en C₁-C₄, (alkyl en C₁-C₄)-sulfonyle, (alkyl en C₁-C₄) sulfinyle, (alkyl en C₁-C₄) thio, alkoxy en C₁-C₄, (alkoxy en C₁-C₄)-alkoxy en C₁-C₄, (alkyl en C₁-C₄) carbonyle, (alkyl en C₁-C₄) aminosulfonyle, di (alkyl en C₁-C₄) -aminosulfonyle, (alkyl en C₁-C₄)-carbamoyle, di (alkyl en C₁-C₄) carbamoyle, (alkoxy en C₁-C₄) -alkyle en C₁-C₄, (alkyl en C₁-C₄) -amino ou di (alkyl en C₁-C₄) amino ;
R² représente un groupe halo (alkoxy en C₁-C₄) alkyle en C₁-C₄, (alkoxy en C₁-C₄) - (alkoxy en C₁-C₄) - (alkoxy en C₁-C₄) -alkyle en C₁-C₄, (cycloalkoxy en C₃-C₆) -alkyle en C₁-C₄, (cycloalkyl en C₃-C₆) -alkoxy en C₁-C₄, tétrahydrofuran-2-yl-méthoxy-(alkyle en C₁-C₄), tétrahydrofuran-3-yl-méthoxy- (alkyle en C₁-C₄, ou un reste hétérocyclique pris dans le groupe comprenant isoxazol-3-yle et 4,5-dihydroisoxazol-3-yle substitué par un reste pris dans le groupe comprenant cyanométhyle, éthoxy- méthyle et méthoxyméthyle ;
R³ représente un groupe OR⁵, cyano, halogène, cyanato, thiocyanato, (alkyl en C₁-C₄)thio, (alkyl en C₁-C₄) sulfinyle, (alkyl en C₁-C₄)-sulfonyle, (alcényl en C₂-C₄) thio, (alcényl en C₂-C₄)sulfinyle, (alcényl en C₂-C₄) sulfonyle, (alcynyl en C₂-C₄) thio, (alcynyl en , C₂-C₄)-sulfinyle, (alcynyl en C₂-C₄) sulfonyle, halo (alkyl en C₁-C₄) thio, halo (alcényl en C₂-C₄)-thio, halo (alcynyle C₂-C₄) thio, halo (alkyl en C₁-C₄) sulfinyle, halo(alcényl en C₂-C₄) sulfinyle, halo (alcynyle en C₂-C₄) sulfinyle, halo (alkyl en C₁-C₄) sulfonyle, halo (alcényl en C₂-C₄) sulfonyle, halo (alcynyle en C₂-C₄) sulfonyle ;
R⁴ représente un groupe alkyle en C₁-C₄ ;
R⁵ représente un atome d'hydrogène, un groupe alkyle en C₁-C₄, haloalkyle en C₁-C₄ ou (alkoxy en C₁-C₄) -alkyle en C₁-C₄ ;
a vaut 0,1, 2 ou 3 ;
b vaut 0,1 ou 2 ;
et
B) une quantité à efficacité antidote d'un ou plusieurs composés pris dans les groupes a) à e) :
a) Composés de formules (II) à (IV), 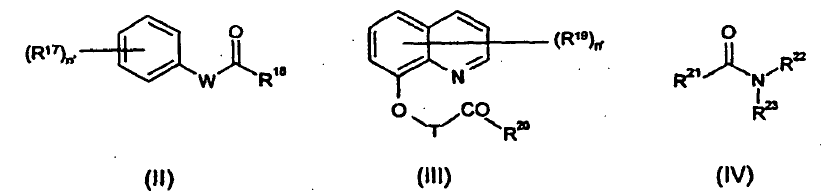
dans lesquelles les symboles et les indices possèdent les significations suivantes :
n' est un nombre naturel de 1 à 5, de préférence de 1 à 3 ;
T représente un chaîne (alcane en C₁ ou en C₂)-diyle, qui est non substituée ou substituée par+ un ou deux restes alkyle en C₁-C₄ ou (alkoxy en C₁-C₃)-carbonyle
W représente un reste pris dans les groupes (W1) à (W4), 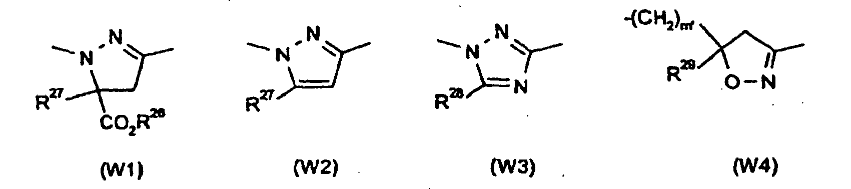
m' vaut 0 ou 1 ;
R¹⁷, R¹⁹ identiques ou différents, représentent un atome d'hydrogène, un atome d'halogène, un groupe alkyle en C₁-C₄, alkoxy en C₁-C₄, nitro ou haloalkyle en C₁-C₄ ;
R¹⁸, R²⁰ identiques oiu différents représentent un groupe OR²⁴ , SR²⁴ ou NR²⁴R²⁵ ou un hétérocycle de 3 à 7 chaînons saturé ou insaturé comprenant au moins un atome d'azote et jusqu'à 3 hétéroatomes, qui est relié par l'intermédiaire de l'atome de N au groupe carbonyle dans les formules (II) ou (III) et est non substitué ou substitué par des restes pris dans le groupe alkyle en C₁-C₄, alkoxy en C₁-C₄ ou phényle éventuellement substitué, de préférence un reste de formule OR²⁴, NHR²⁵ ou N(CH₃)₂, en particulier de formule OR²⁴;
R²⁴ représente un atome d'hydrogène ou un reste hydrocarboné aliphatique non substitué ou substitué, de préférence présentant au total de 1 à 18 atomes de carbone ;
R²⁵ représente un atome d'hydrogène, un groupe alkyle en C₁-C₆, alkoxy en C₁-C₆ ou phényle substitué ou non substitué ;
R²⁶ représente un atome d'hydrogène, un groupe alkyle en C₁-C₈, haloalkyle en C₁-C₈, (alkoxy en C₁-C₄) -alkyle en C₁-C₄, hydroxyalkyle en C₁-C₆, cycloalkyle en C₃-C₁₂ ou tri (alkyl en C₁-C₄)-silyle ;
R²⁷, R²⁸, R²⁹ identiques ou différents représentent un atome d'hydrogène, un groupe alkyle en C₁-C₈, haloalkyle en C₁-C₆, cycloalkyle en C₃-C₁₂ ou phényle substitué ou non substitué ;
R²¹ représente un groupe alkyle en C₁-C₄, haloalkyle en C₁-C₄, alcényle en C₂-C₄, haloalcényle en C₂-C₄, cycloalkyle en C₃-C₇, de préférence dichlorométhyle ;
R²² , R²³ identiques ou différents représentent un atome d'hydrogène, un groupe alkyle en C₁-C₄, alcényle en C₂-C₄, alcynyle en C₂-C₄, haloalkyle en C₁-C₄, haloalcényle en C₂-C₄, (alkyl en C₁-C₄) -carbamoyl-alkyle en C₁-C₄, (alcényl en C₂-C₄) -carbamoyl-alkyle en C₁-C₄, (alkoxy en C₁-C₄) -alkyle en C₁-C₄, dioxolanyl-alkyle en C₁₋C₄, thiazolyle, furyle, furylalkyle, thiényle, pipéridyle, phényle substitué ou non substitué, ou R²² et R²³ ensemble forment un cycle hétérocyclique substitué ou non substitué, de préférence un cycle oxazolidine, thiazolidine, pipéridine, morpholine, hexahydropyrimidine ou benzoxazine,
b) un ou plusieurs composés pris dans le groupe :
anhydride d'acide 1,8-naphtalique_{;}
diphénylméthoxyacétat de méthyle,
cyanométhoxyimino(phényl)acétonitrile (cyometrinil),
1,3-dioxolan-2-ylméthoxyimino(phényl)acétonitrile (oxabetrinil),
4'-chloro-2,2,2-trifluoracétophénone O-1,3-dioxolan-2-ylméthyloxime (fluxofenim),
4,6-dichloro-2-phénylpyrimidine (fenclorim),
2-chloro-4-trifluorométhyl-1,3-thiazol-5-carboxylate de benzyle (flurazole),
2-dichlorométhyl-2-méthyl-1,3-dioxolane (MG-191),
N-(4-méthylphényl)-N'-(1-méthyl-1-phényléthyl)urée (dymron),
1-[4-(N-2-méthoxybenzoylsulfamoyl)phényl]-3-méthylurée,
1-[4-(N-2-méthoxybenzoylsulfamoyl)phényl]-3,3-diméthylurée,
1-[4-(N-4,5-diméthylbenzoylsulfamoyl)phényl]-3-méthylurée,
1-[4-(N-naphtoylsulfamoyl)phényl]-3,3-diméthylurée,
acide (2,4-dichlorophénoxy)acétique (2,4-D),
acide (4-chlorophénoxy) acétique,
acide (R,S)-2-(4-chlor-o-tolyloxy)propionique (mecoprop),
acide 4-(2,4-dichlorophénoxy)butyrique (2,4-DB),
acide (4-chlor-o-tolyloxy)acétique (MCPA),
acide 4-(4-chlor-o-tolyloxy)butyrique,
acide 4-(4-chlorophénoxy)butyrique,
acide 3,6-dichloro-2-méthoxybenzoique (dicamba),
3,6-dichloro-2-méthoxybenzoate de 1-(éthoxycarbonyl)-éthyle (lactidichlor),
ainsi que leurs sels et esters, de préférence en C₁-C₈ ;
c) N-acylsulfonamides de formule (V) et leurs sels, 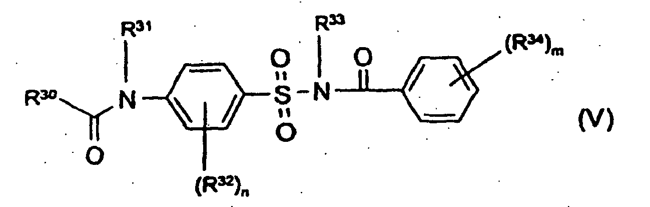
où
R³⁰ représente un atome d'hydrogène, un reste carboné tel qu'un reste hydrocarboné, un reste hydrocarboxy, un reste hydrocarbothio, ou un reste hétérocyclyle, chacun des 4 derniers restes cités est non substitué ou substitué par un ou plusieurs restes identiques ou différents pris dans le groupe comprenant un atome d'halogène, un groupe cyano, nitro, amino, hydroxy, carboxy, formyle, carboxamide, sulfonamide et des restes de formule Z^{a}-R^{a}, chacun des fragments hydrocarbonés présente de préférence 1 à 20 atomes de carbone et un reste carboné R³⁰ y compris les substituants de préférence 1 à 30 atomes de carbone ;
R³¹ représente un atome d'hydrogène ou un groupe alkyle en C₁-C₄, de préférence un atome d'hydrogène, ou
R³⁰ et R³¹ ensemble avec le groupe de formule -CO-N-représentent le reste d'un cycle de 3 à 8 chaînons, saturé ou insaturé ;
R³² identiques ou différents représentent un atome d'halogène, un groupe cyano, nitro, amino, hydroxy, carboxy, formyle, CONH₂, SO₂NH₂ ou un reste de formule -Z^{b}-R^{b} ;
R³³ représente un atome d'hydrogène ou un groupe alkyle en C₁-C₄, de préférence un atome d'hydrogène ;
R³⁴ identiques ou différents représentent un atome d'halogène, un groupe cyano, nitro, amino, hydroxy, carboxy, CHO, CONH₂, SO₂NH₂ ou un reste de formule -Z^{c}-R^{c} ;
R^{a} représente un reste hydrocarboné ou un reste hétérocyclyle, chacun des deux derniers restes cités est non substitué ou substitué par un ou plusieurs restes identiques ou différents pris dans le groupes comprenant un atome d'halogène, un groupe cyano, nitro, amino, hydroxy, mono- et di- (alkyl en C₁-C₄) -amino, ou un reste alkyle, dans lequel plusieurs, de préférence 2 ou 3, groupes CH₂ non adjacents sont à chaque fois remplacés par un atome d'oxygène ;
R^{b}, R^{c} identiques ou différents représentent un reste hydrocarboné ou un reste hétérocyclyle, chacun des deux derniers restes cités pouvant être non substitué ou substitué par un ou plusieurs restes identiques ou différents pris dans le groupe comprenant un atome d'halogène, cyano, nitro, amino, hydroxy, phosphoryle, halogénoalkoxy en C₁-C₄, mono- et di-(alkyl en C₁-C₄)-amino, ou un reste alkyle, dans lequel plusieurs, de préférence 2 ou 3, groupes CH₂ non adjacents sont à chaque fois remplacés par un atome d'oxygène ;
Z^{a} représente un groupe bivalent de formule -O-, -S-, -CO-, -CS-, -CO-O-, -CO-S-, -O-CO-, -S-CO-, -SO-, -SO₂-, -NR*-, -CO-NR*-, -NR*-CO-, -SO₂-NR*- ou -NR*-SO₂-, la liaison indiquée à droite du groupe bivalent concerné est la liaison vers le reste R^{a} et les restes R* dans les 5 derniers restes cités représentent à chaque fois, indépendamment, un atome d'hydrogène, un groupe alkyle en C₁-C₄ ou haloalkyle en C₁-C₄ ;
Z^{b}, Z^{c} indépendamment l'un de l'autre représentent une liaison directe ou un groupe bivalent de formule -O-, -S-, -CO-, -CS-, -CO-O-, -CO-S-, -O-CO-, -S-CO-, -SO-, -SO₂-, -NR*-, -SO₂-NR*-, -NR*-SO₂-, -CO-NR*- ou -NR*-CO-, la liaison indiquée à droite du groupe bivalent concerné est la liaison vers le reste R^{b} ou R^{c}, et les R* dans les 5 derniers restes cités représentent indépendamment les uns des autres à chaque fois, un atome d'hydrogène, un groupe alkyle en C₁-C₄ ou haloalkyle en C₁-C₄ ;
n est un entier de 0 à 4, de préférence 0, 1 ou 2, en particulier 0 ou 1, et
m est un entier de 0 à 5, de préférence 0, 1, 2 ou 3, en particulier 0, 1 ou 2 ;
d) amides d'acide acylsulfamoylbenzoïque de formule générale (VI), éventuellement aussi sous forme salifiée, 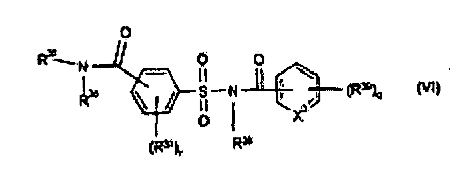
dans laquelle
X³ représente un groupe CH ou N ;
R³⁵ représente un atome d'hydrogène, un groupe hétérocyclyle ou un reste hydrocarboné, les deux derniers restes cités pouvant éventuellement être substitués par un ou plusieurs restes identiques ou différents pris dans le groupe comprenant halogène, cyano, nitro, amino, hydroxy, carboxy, CHO, CONH₂, SO₂NH₂ et Z^{a}-R^{a} ;
R³⁶ représente un atome d'hydrogène, un groupe hydroxy, alkyle en C₁-C₆, alcényle en C₂-C₆, alcynyle en C₂-C₆, alkoxy en C₁-C₆, (alcényl en C₂-C₆)oxy, les 5 derniers restes cités peuvent éventuellement être substitués par un ou plusieurs restes pris dans le groupe comprenant halogène, hydroxy, alkyle en C₁-C₄, alkoxy en C₁-C₄ et (alkyl en C₁-C₄)thio, ou
R³⁵ et R³⁶ ensemble avec l'atome d'azote qui les porte forment un cycle de 3 à 8 chaînons saturé ou insaturé ;
R³⁷ représente un atome d'halogène, un groupe cyano, nitro, amino, hydroxy, carboxy, CHO, CONH₂, SO₂NH₂ ou Z^{b}-R^{b} ;
R³⁸ représente un atome d'hydrogène, un groupe alkyle en C₁-C₄, alcényle en C₂-C₄ ou alcynyle en C₂-C₄ ;
R³⁹ représente un atome d'halogène, un groupe cyano, nitro, amino, hydroxy, carboxy, phosphoryle, CHO, CONH₂, SO₂NH₂ ou Z^{c}-R^{c} ;
R^{a} représente un reste alkyle en C₂-C₂₀, dont la chaîne carbonée est interrompue une ou plusieurs fois par des atomes d'oxygène, un groupe hétérocyclyle ou un reste hydrocarboné, les deux derniers restes cités étant éventuellement substitués par un ou plusieurs restes identiques ou différents pris dans le groupe comprenant un atome d'halogène, un groupe cyano, nitro, amino, hydroxy, mono- et di (alkyl en C₁-C₄) -amino ;
R^{b}, R^{c} identiques ou différents représentent un reste alkyle en C₂-C_{20,} dont la chaîne hydrocarbonée est interrompue une ou plusieurs fois par des atomes d'oxygène, un groupe hétérocyclyle ou un reste hydrocarboné, les deux derniers restes cités étant éventuellement substitués par un ou plusieurs restes identiques ou différents pris dans le groupe comprenant un atome d'halogène, un groupe cyano, nitro, amino, hydroxy, phosphoryle, haloalkoxy en C₁-C₄, mono- et di(alkyl en C₁-C₄)amino ;
Z^{a} représente une unité bivalente prise dans le groupe comprenant O, S, CO, CS, C(O)O, C(O)S, SO; SO₂, NR^{d}, C(O)NR^{d} ou SO₂NR^{d};
Z^{b}, Z^{c} identiques ou différents représentent une liaison directe ou une unité bivalente prise dans le groupe comprenant O, S, CO, CS, C(O)O, C (O) S, SO, SO₂, NR^{d}, SO₂NR^{d} ou C(O)NR^{d} ;
R^{d} représente un atome d'hydrogène, un groupe alkyle en C₁-C₄ ou haloalkyle en C₁-C₄ ;
r est un entier de 0 à 4, et
q pour le cas où X³ est un groupe CH, est un entier de 0 à 5, et dans le cas où X est N, est un entier de 0 à 4 ;
e) composés de formule (VII) 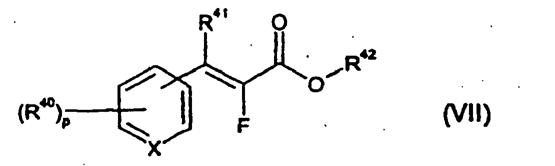
dans laquelle les symboles et les indices possèdent les significations suivantes :
X représente un groupe CH ou N,
p pour le cas où X = N, est un entier de 0 à 2, et
pour le cas où X = CH, est un entier de 0 à 3, et
R⁴⁰ représente un atome d'halogène, un groupe alkyle en C₁-C₄, haloalkyle en C₁-C₄, alkoxy en C₁-C₄, haloalkoxy en C₁-C₄, nitro, (alkyl en C₁-C₄)-thio, (alkyl en C₁-C₄)sulfonyle, (alkoxy en C₁-C₄,)carbonyle, phényle ou phénoxy, les deux derniers restes cités sont non substitués ou substitués par un ou plusieurs, de préférence jusqu'à trois, restes identiques ou différents pris dans le groupe comprenant un atome d'halogène, un groupe alkyle en C₁-C₄, haloalkyle en C₁-C₄, alkoxy en C₁-C₄, halogénoalkoxy en C₁-C₄, nitro, cyano ;
R⁴¹ représente un atome d'hydrogène ou un groupe alkyle en C₁-C₄, et
R⁴² représente un atome d'hydrogène, un groupe alkyle en C₁-C₈, cycloalkyle en C₃-C₆, alcényle en C₂-C₆, alcynyle en C₂-C₆ ou aryle, chacun des restes carbonés précités sont non substitués ou substitués par un ou plusieurs, de préférence jusqu'à trois restes identiques ou différents pris, dans le groupe comprenant un atome d'halogène, un groupe nitro, cyano, hydroxy, alkoxy en C₁-C₈, où un ou plusieurs, de préférence jusqu'à trois, groupes CH₂ peuvent être remplacés par des atomes d'oxygène, un groupe (alkyl en C₁-C₄) thio, (alkyl en C₁-C₄)-sulfonyl, cycloalkyle en C₃-C₆, alcényloxy en C₂-C₄, alcynyloxy en C₂-C₄,
y compris les stéréoisomères et les sels utilisables en agriculture.

2. Agent herbicide selon la revendication 1, renfermant un antidote de formule (II) et/ou (III), dans lesquelles les symboles et les indices possèdent les significations suivantes :
R²⁴ représente un atome d'hydrogène, un groupe alkyle en C₁-C₁₈, cycloalkyle en C₃-C₁₂, alcényle en C₂-C₈ et alcynyle en C₂-C₁₈, les groupes carbonés pouvant être substitués par un ou plusieurs, de préférence jusqu'à 3, restes R⁵⁰ ;
R⁵⁰ identiques ou différents représentent un atome d'halogène, un groupe hydroxy, alkoxy en C₁-C₈, (alkyl en C₁-C₈) thio, (alcényl en C₂-C₈)thio, (alcynyl en C₂-C₈) thio, alcényloxy en C₂-C₈, alcynyloxy en C₂-C₈, cycloalkyle en C₃-C₇, cycloalkoxy en C₃-C₇, cyano, mono- et di-(alkyl en C₁-C₄)amino, carboxy, (alkoxy en C₁-C₈)-carbonyle, (alcényl en C₂-C₈) oxycarbonyle, (alkyl en C₁-C₈)thiocarbonyle, (alcynyl en C₂-C₈) -oxycarbonyle, (alkyl en C₁-C₈) carbonyle, (alcényl en C₂-C₈)carbonyle, (alcynyl en C₂-C₈)-carbonyle, 1-(hydroxyimino)alkyle en C₁-C₆, 1-(alkylimino en C₁-C₄) -alkyle en C₁-C₄ , 1-(alkoxyimino en C₁-C₄) -alkyle en C₁-C₆, (alkyl en C₁-C₈) carbonylamino, (alcényl en C₂-C₈) carbonylamino, (alcynyl en C₂-C₈)carbonylamino, aminocarbonyle, (alkyl en C₁-C₈) aminocarbonyle, di(alkyl en C₁-C₆)aminocarbonyle, (alcényl en C₂-C₆) aminocarbonyle, (alcynyl en C₂-C₆) aminocarbonyle, (alkoxy en C₁-C₈) carbonylamino, (alkyl en C₁-C₈)aminocarbonylamino, (alkyl en C₁-C₆) carbonyloxy, qui est non substitué ou substitué par R⁵¹, (alcényl en C₂-C₆) carbonyloxy, (alcynyl en C₂-C₆) carbonyloxy, (alkyl en C₁-C₈)-sulfonyle, phényle, phénylalkoxy en C₁-C₆, phënyl (alkoxy en C₁-C₆) carbonyle, phénoxy, phénoxy-alkoxy en C₁-C₆, phénoxy(alkoxy en C₁-C₆)carbonyle, phénylcarbonyloxy, phénylcarbonylamino, phényl(alkyl en C₁-C₆)-carbonylamino, les 9 derniers restes cités sont non substitués ou substitué sur le cycle phényle une ou plusieurs fois, de préférence jusqu'à trois fois par des restes R⁵² ; SiR'₃, -O-SiR'₃, R'₃Si-alkoxy en C₁-C₈, -CO-O-NR'₂, -O-N=CR' ₂, -N=CR'₂, -O-NR'₂, -NR'₂, CH (OR')₂, -O- (CH₂)ₘ-CH (OR') ₂, -CR" ' (OR')₂, -O- (CH₂)ₘCR" ' (OR")₂ ou par R"O-CHR"'CHCOR"-alkoxy en C₁-C₆,
R⁵¹ identiques ou différents représentent un atome d'halogène, un groupe nitro, alkoxy en C₁-C₄, et un groupe phényle non substitué ou substitué par un ou plusieurs restes, de préférence jusqu'à trois restes R⁵¹ ;
R⁵² identiques ou différents représentent un atome d'halogène, un groupe alkyle en C₁-C₄, alkoxy en C₁-C₄, haloalkyle en C₁-C₄, haloalkoxy en C₁-C₄ ou nitro ;
R' identiques ou différents représentent un atome d'hydrogène, un groupe alkyle en C₁-C₄, un groupe phényle non substitué ou substitué par un ou plusieurs, de préférence jusqu'à trois reste R⁵², ou deux restes R' forment ensemble une chaîne (alcane en C₂-C₆)diyle ;
R" identiques ou différents représentent un groupe alkyle en C₁-C₄ ou deux restes R" forment ensemble une chaîne (alcane en C₂-C₆)diyle ;
R"' représente un atome d'hydrogène ou un groupe alkyle en C₁-C₄ ;
m vaut 0, 1, 2, 3, 4, 5 ou 6.

3. Agent herbicide selon la revendication 1 ou 2, renfermant un antidote de formule (II) et/ou (III), dans lesquelles les symboles et indices possèdent les significations suivantes :
R²⁴ représente un atome d'hydrogène, alkyle en C₁-C₈ ou cycloalkyle en C₃-C₇, les restes carbonés précités sont non substitués ou substitués une ou plusieurs fois par un substituant halogène, ou une ou deux fois, de préférence une fois, par des restes R⁵⁰ ;
R⁵⁰ identiques ou différents représentent un groupe hydroxy, alkoxy en C₁-C₄, carboxy, (alkoxy en C₁-C₄) carbonyle, (alcényl en C₂-C₆)oxycarbonyle, (alcynyl en C₂-C₆)oxycarbonyle, 1-(hydroxyimino) alkyle en C₁-C₄, 1- (alkylimino en C₁-C₄)-alkyle en C₁-C₄ et 1-(alkoxyimino en C₁-C₄)-alkyle en C₁-C₄, -SiR'₃, -O-N=CR'₂, -N=R'₂ et -O-NR'₂, où R' identiques ou différents représentent un atome d'hydrogène, un groupe alkyle en C₁-C₄ ou par paires une chaîne (alcane en C₄-C₅)diyle ;
R²⁷, R²⁸, R²⁹ identiques ou différents représentent un atome d'hydrogène, un groupe alkyle en C₁-C₈, haloalkyle en C₁-C₆, cycloloalkyle en C₃-C₇ ou phényle, qui est non substitué ou substitué par un ou plusieurs restes pris dans le groupe comprenant un atome d'halogène, un groupe cyano, nitro, amino, mono- et di-(alkyl en C₁-C₄)-amino, alkyle en C₁-C₄, haloalkyle en C₁-C₄, alkoxy en C₁-C₄, haloalkoxy en C₁-C₄, (alkyl en C₁-C₄) thio et (alkyl en C₁-C₄)-sulfonyle ;
R¹⁷, R¹⁹ identiques ou différents représentent un atome d'hydrogène, un atome d'halogène, un groupe méthyle, éthyle, méthoxy, éthoxy, haloalkyle en C₁ ou C₂, de préférence un atome d'hydrogène, un atome d'halogène ou un groupe haloalkyle en C₁ ou C₂.

4. Agent herbicide selon l'une des revendications 1 à 3, renfermant un antidote de formule (II), dans laquelle les symboles et indices possèdent les significations suivantes :
R¹⁷ représente un atyome d'halogène, un groupe nitro ou haloalkyle en C₁-C₄;
n' vaut 1, 2 ou 3;
R¹⁸ représente un reste de formule OR²⁴;
R²⁴ représente un atome d'hydrogène, un groupe alkyle en C₁-C₈ ou cycloalkyle en C₃-C₇, les restes carbonés précités étant non substitués ou substitués une ou plusieurs fois, de préférence jusqu'à trois fois, par des restes halogénés identiques ou différents, ou jusqu'à deux fois, de préférence une fois, par des restes identiques ou différents pris dans le groupe comprenant hydroxy, alkoxy en C₁-C₄, (alkoxy en C₁-C₄)carbonyle, (alcényl en C₂-C₆)-oxycarbonyle, (alcynyl en C₂-C₆)oxycarbonyle, 1-(hydroxyimino)alkyle en C₁-C₄, 1-(alkylimino en C₁-C₄)-alkyle en C₁-C₄, 1- (alkoxyimino en C₁-C₄)-alkyle en C₁-C₄ et les restes de formules -SiR' ₃, -O-N=R'₂, -N=CR'₂, -NR'₂ et -O-NR'₂, où les restes R' dans les formules précitées sont identiques ou différents et représentent un atome d'hydrogène, un groupe alkyle en C₁-C₄ ou par paires une chaîne (alcane en C₄ ou C₅) diyle ;
R²⁷, R²⁸, R²⁹ identiques ou différents représentent un atome d'hydrogène, un groupe alkyle en C₁-C₈, haloalkyle en C₁-C₆, cycloalkyle en C₃-C₇ ou phényle, qui est non substitué ou substitué par un ou plusieurs restes pris dans le groupe comprenant un atome d'halogène, un groupe alkyle en C₁-C₄, alkoxy en C₁-C₄, nitro, haloalkyle en C₁-C₄ et haloalkoxy en C₁-C₄.

5. Agent herbicide selon la revendication 1, renfermant un composé de formule (I), dans laquelle les symboles et indices possèdent les significations suivantes :
R¹ représente un groupe nitro, cyano, chloro, fluoro, méthyle, trifluorméthyle, méthylsulfonyle, éthylsulfonyle ;
R² représente un groupe pentafluoroéthoxyméthyle, 2,2-difluoréthoxyméthyle, 2,2,2-trifluoréthoxyméthyle, 2,2,3,3-tétrafluorpropoxyméthyle, cyclopentyloxyméthyle, cyclohexyloxyméthyle, cyclopropyloxy, tétrahydrofuran-2-yl-méthoxyméthyle, méthoxyéthoxyéthoxyméthyle, ou un groupe 4,5-dihydro-isoxazol-3-yle substitué par un reste pris dans le groupe comprenant cyanométhyle, éthoxyméthyle et méthoxyméthyle ;
R³ représente un groupe OR⁵ ;
R⁵ représente un atome d'hydrogène ;
a vaut 2 ;
b vaut 0, et les deux restes R¹ se trouvent en positions 2 et 4 du cycle phényle.

6. Agent herbicide selon l'une des revendications 1 à 5, **caractérisé en ce que** le rapport en poids de l'herbicide à l'antidote est de 1:10 à 10:1.

7. Agent herbicide selon l'une des revendications 1 à 6, **caractérisé en ce qu'**il renferme un autre herbicide.

8. Procédé pour la lutte contre les mauvaises herbes dans les cultures, **caractérisé en ce qu'**on applique une quantité efficace d'un agent herbicide selon une ou plusieurs des revendications 1 à 7 aux mauvaises herbes, aux plantes, au semis des plantes ou à la surface de pousse des plantes.

9. Procédé selon la revendication 8, **caractérisé en ce que** les plantes provient du groupe comprenant la canne à sucre, le mais, le blé, le seigle, l'orge, l'avoine, le riz, le sorgho, le coton et le soja.

10. Procédé selon la revendication 8 ou 9, **caractérisé en ce que** les plantes sont génétiquement modifiées.
